# EUROPEAN PATENT SPECIFICATION

(11) **EP 3 977 789 B1**
(45) Date of publication and mention of the grant of the patent: **28.02.2024**
(21) Application number: 20732075.5
(22) Date of filing: 22.05.2020
(51) Int. Cl.: H04W 52/36

(54) **HIGH EFFICIENCY TRANSMISSION MODE SUPPORT**
UNTERSTÜTZUNG VON HOCHEFFIZIENTEM ÜBERTRAGUNGSMODUS
SUPPORT DE MODE DE TRANSMISSION À HAUT RENDEMENT

(30) Priority: 25.05.2019 US 201962852998 P; 21.05.2020 US 202016880963
(43) Date of publication of application: 06.04.2022
(73) Proprietor: QUALCOMM INCORPORATED, San Diego, California 92121-1714 (US)
(72) Inventor: MUKKAVILLI, Krishna Kiran, San Diego, California 92121-1714 (US); BURKE, Joseph Patrick, San Diego, California 92121-1714 (US); SORIAGA, Joseph Binamira, San Diego, California 92121-1714 (US); ANG, Peter Pui Lok, San Diego, California 92121-1714 (US); ABDELGHAFFAR, Muhammad Sayed Khairy, San Diego, California 92121-1714 (US); NGUYEN, Cong, San Diego, California 92121-1714 (US); HAO, Charline, San Diego, California 92121-1714 (US); JI, Tingfang, San Diego, California 92121-1714 (US)
(74) Representative: Bardehle Pagenberg Partnerschaft mbB Patentanwälte Rechtsanwälte
(86) International application number: PCT/US2020/034384
(87) International publication number: WO 2020/243005

(56) References cited:
- EP-A1- 3 413 637
- WO-A1-2009/094525
- US-A1- 2018 302 906

## Description

### BACKGROUND

The following relates generally to wireless communications, and more specifically to high efficiency transmission mode signaling.

Wireless communications systems are widely deployed to provide various types of communication content such as voice, video, packet data, messaging, broadcast, and so on. These systems may be capable of supporting communication with multiple users by sharing the available system resources (e.g., time, frequency, and power). Examples of such multiple-access systems include fourth generation (4G) systems such as Long Term Evolution (LTE) systems, LTE-Advanced (LTE-A) systems, or LTE-A Pro systems, and fifth generation (5G) systems which may be referred to as New Radio (NR) systems. These systems may employ technologies such as code division multiple access (CDMA), time division multiple access (TDMA), frequency division multiple access (FDMA), orthogonal frequency division multiple access (OFDMA), or discrete Fourier transform spread orthogonal frequency division multiplexing (DFT-S-OFDM).

A wireless multiple-access communications system may include a number of base stations or network access nodes, each simultaneously supporting communication for multiple communication devices, which may be otherwise known as user equipment (UE). In some cases, different UEs within a wireless communications system may have different power requirements or hardware (e.g., power amplifiers) for communicating with a base station or other UEs. For example, different UEs may use different power amplifiers capable of achieving the different power requirements. Wireless communications systems may have channel leakage requirements that result in UEs operating power inefficiently. Efficient techniques are desired for accommodating the different power requirements of the different UEs within a same wireless communications system.

EP 3413637 A1 discusses the terminal apparatus transmits the capability information indicating the supported operating band and the supported subcarrier spacing to the base station apparatus. The base station apparatus configures the frequency (carrier frequency) and subcarrier spacing for the operating band which is used by the terminal apparatus, based on the received capability information and the operating band supported by the terminal apparatus. In a case that the operating band is associated with the subcarrier spacing, only the carrier frequency may be configured. The terminal apparatus corrects the maximum output power value for each uplink signal/uplink physical channel, based on the configured information and/or parameter.

US 2018/302906 A1 discloses that the wireless device determines at least two waveform parameters based on the metric of the wireless device, for communicating data between the wireless device and the radio network node in the wireless communications network. The at least two waveform parameters may comprise one or more of: a frequency band; a numerology such as subcarrier spacing width and CP length; a maximum bandwidth; an antenna configuration; and a Modulation and Coding Scheme. The at least two waveform parameters are different waveform parameters or different values of a same waveform parameter. The metric of the wireless device may comprise one or more of: power consumption of the wireless device or performance of the wireless device. Thus, the wireless device may determine two or more waveform parameters that consume power as little as possible but also provide a level of throughput of data over a certain rate.

WO 2009/094525 A1 discloses a terminal can communicate with one or more other devices in a system using a spectral allocation provided in a resource assignment to the terminal (e.g., from a base station). Based on the spectral allocation given in a resource assignment, a backoff evaluator at the terminal can determine a backoff to apply to the transmit power of the terminal in order to comply with spectral masks or other constraints and/or regulations.

### SUMMARY

The invention is defined by the appended independent claims. Advantageous embodiments are subject to the dependent claims. In the following, each of the described methods, apparatuses, systems, examples and aspects, which does not fully correspond to the invention as defined in the appended claims, is thus not according to the invention and is, as well as the whole following description, present for illustration purposes only or to highlight specific aspects or features of the appended claims.

The following description and the annexed drawings set forth in detail certain illustrative features of the one or more aspects. These features are indicative, however, of but a few of the various ways in which the principles of various aspects may be employed, and this description is intended to include all such aspects.

### BRIEF DESCRIPTION OF THE DRAWINGS

FIG. 1 illustrates an example of a system for wireless communications that supports high efficiency transmission mode signaling in accordance with aspects of the present disclosure.
FIG. 2 illustrates an example of a wireless communications system that supports high efficiency transmission mode signaling in accordance with aspects of the present disclosure.
FIGs. 3, 4, and 5 illustrate examples of operating modes that support high efficiency transmission mode signaling in accordance with aspects of the present disclosure.
FIG. 6 illustrates an example of a process flow that supports high efficiency transmission mode signaling in accordance with aspects of the present disclosure.
FIGs. 7 and 8 show block diagrams of devices that support high efficiency transmission mode signaling in accordance with aspects of the present disclosure.
FIG. 9 shows a block diagram of a communications manager that supports high efficiency transmission mode signaling in accordance with aspects of the present disclosure.
FIG. 10 shows a diagram of a system including a device that supports high efficiency transmission mode signaling in accordance with aspects of the present disclosure.
FIGs. 11 and 12 show block diagrams of devices that support high efficiency transmission mode signaling in accordance with aspects of the present disclosure.
FIG. 13 shows a block diagram of a communications manager that supports high efficiency transmission mode signaling in accordance with aspects of the present disclosure.
FIG. 14 shows a diagram of a system including a device that supports high efficiency transmission mode signaling in accordance with aspects of the present disclosure.
FIGs. 15 through 17 show flowcharts illustrating methods that support high efficiency transmission mode signaling in accordance with aspects of the present disclosure.

### DETAILED DESCRIPTION

In some wireless communications systems, a base station may configure a user equipment (UE) with frequency resources (e.g., a resource allocation), where scheduled transmissions can occur between the base station and the LTE (e.g., uplink and/or downlink communications). For example, any uplink transmissions from the LTE to the base station may occur within the configured frequency resources, where transmission power associated with the uplink transmissions is also confined to the frequency resources. However, in some cases, the UE may be capable of operating in a high-efficiency transmission mode, where a power leakage may occur that results in power for one of the uplink transmissions to spill into other frequency resources outside than the configured frequency resources for the uplink transmissions. Examples of other frequency resources may be adjacent frequency resources or channels, other channels within an operator's bandwidth, other channels of other systems, channels that include out of band harmonics of a power amplifier of the UE (e.g., where such channels are used by different operators), etc. Techniques described herein for operating in a high-efficiency or standard transmission mode may be applied considering adjacent channel or other frequency resource emissions, or emissions to other out of band channels, or some combination of such channels affected by transmissions (e.g., leakage, emissions, etc.) cause by transmissions of the UE.

The above-referenced power leakages may be measured by an adjacent channel leakage ratio (ACLR) emissions test that identifies whether power (e.g., and how much power) leaks into the adjacent frequency resources. In some cases, the power leakage may be subject other out of band emissions (e.g., spectrum emissions, non-adjacent channel leakage, etc.) Such power leakage may be measured or otherwise determined according to a spectrum emissions mask (SEM), which is a relative measurement of the out-of-channel emissions to the in-channel power. The SEM may be used to measure the excess emissions that would interfere to other channels or to other systems. Accordingly, based on failing one or more ACLR emissions (e.g., power leaks into an adjacent channel), a UE may refrain from transmitting corresponding uplink transmissions to reduce chances that the UE jams or interferes with nearby UEs or UEs using the adjacent frequency resources. In some cases, the power leakage may be more prevalent at the edges of the configured frequency resources, where the transmission power is more susceptible to leaking into the adjacent frequency resources based on being closer to the adjacent frequency resources.

In some cases, a UE may be constrained to operate in a lower power amplifier (PA) efficiency mode even though an error vector magnitude (EVM) requirement for the UE is relatively low (e.g., not as high as a requirement that the UE would otherwise be able to satisfy). The lower PA efficiency mode may ensure that the ACLR from the UE is not impacting other UEs in the wireless communications system and/or affecting neighboring bands of operation. However, if the UE has several modes of operation (e.g., low efficiency, linear and high efficiency, non-linear, etc.), the UE and the network may pick the mode of operation depending on various UE requirements (e.g., coverage for a cell edge UE may not require high EVM, such as for low spectral efficiency modes). Additionally, different UEs (e.g., new categories of devices, smartwatches, etc.) may be enabled on cellular networks that are both power and size constrained (e.g., PA class, battery, etc.). Accordingly, different modes of operation may be desired for the UEs to accommodate higher efficiencies.

As described herein, a LTE may transmit an indication, to a base station, of different operating modes the UE is capable of using (e.g., normal transmission efficiency operating mode, high transmission efficiency operating mode, etc.). For example, the different operating modes may include different decibel (dB) ranges for different levels of efficiencies (e.g., higher efficiencies have smaller dB ranges than lower efficiencies with larger dB ranges). In some cases, this indication of the different operating modes may include values of power parameters of the UE (e.g., power headroom (PHR), maximum power reduction (MPR), etc.), antenna configurations and antenna parameters of the UE, battery state information or other indications of available power for the UE, a state of the UE, etc. Accordingly, based on the indication, the base station may determine the different operating modes of the UE. In some cases, the base station may signal a subsequent indication for the UE to use a specific operating mode. Additionally, or alternatively, the base station may signal an additional indication of the possible operating modes for the UE to use, and the UE may determine which operating mode to use (e.g., based on an autonomous determination at the UE without additional signaling from the base station). In some cases, the UE may indicate (e.g., UE assistance information) to the base station whether scheduling decisions (e.g., scheduling grants, configurations, etc.) are power efficient for the UE, which may enable the base station to determine an operating mode for the UE to use.

Additionally, the UE may use a high transmission efficiency mode if configured with a restricted bandwidth (e.g., a particular bandwidth part (BWP)) for the uplink communications, where the LTE is configured to be scheduled in the restricted bandwidth or scheduled within the restricted bandwidth. For example, if the base station configures the UE to communicate in a certain restricted bandwidth configured for the high transmission efficiency operating mode, the UE may determine to use the high transmission efficiency operating mode based on being configured to use the restricted bandwidth. In some cases, based on the indication of the UE being capable of the different operating modes, the base station and/or the UE may mitigate any ACLR emissions failures (e.g., leakage emission test failures). For example, any uplink transmissions originally scheduled to occur near an edge of configured frequency resources (e.g., and, as such, may leak into an adjacent channel) may be moved (e.g., shifted) to occur on center frequency resources of the configured frequency resources. Additionally or alternatively, the base station may relax requirements for ACLR emissions and/or improve interference cancellations to accommodate high efficiency transmissions from the LTE (e.g., the base station may allow the UE to transmit an uplink message even if the corresponding transmission power leaks into frequency resources outside of frequency resources configured for the UE).

Particular aspects of the subject matter described herein may be implemented to realize one or more advantages. The described techniques may support improvements in system efficiency such that a device may decrease power consumption, conserve battery power, extend battery life, and improve overall device efficiency, resulting in improved user experience. As such, supported techniques may include improved network operations and, in some examples, may promote device and network efficiencies, among other benefits.

Aspects of the disclosure are initially described in the context of a wireless communications system. Additionally, aspects of the disclosure are illustrated through an additional wireless communications system, examples of power amplifiers, different modes of operations for a UE, power ranges of the UE, and a process flow. Aspects of the disclosure are further illustrated by and described with reference to apparatus diagrams, system diagrams, and flowcharts that relate to high efficiency transmission mode signaling.

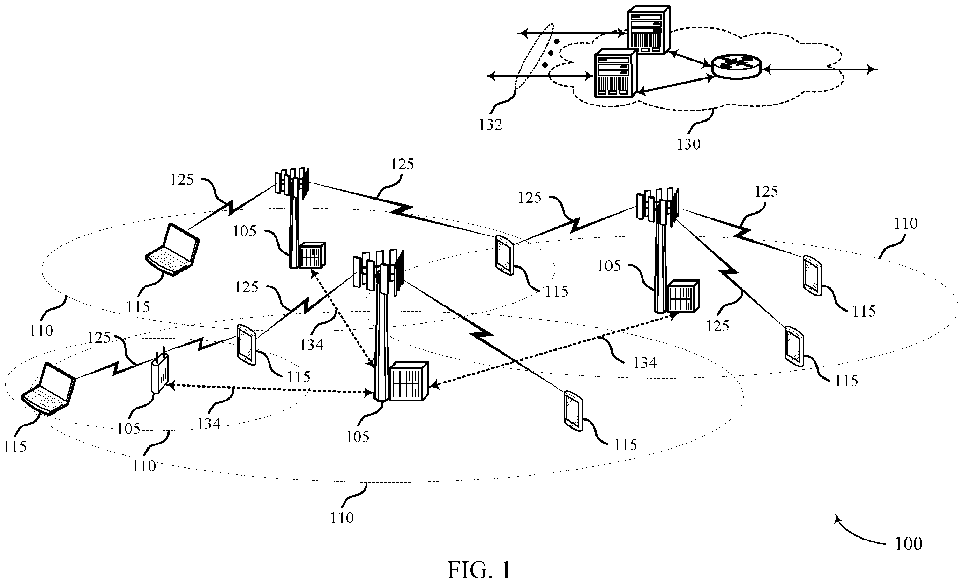

**FIG. 1** illustrates an example of a wireless communications system 100 that supports high efficiency transmission mode signaling in accordance with aspects of the present disclosure. The wireless communications system 100 includes base stations 105, UEs 115, and a core network 130. In some examples, the wireless communications system 100 may be a Long Term Evolution (LTE) network, an LTE-Advanced (LTE-A) network, an LTE-A Pro network, or a New Radio (NR) network. In some cases, wireless communications system 100 may support enhanced broadband communications, ultra-reliable (e.g., mission critical) communications, low latency communications, or communications with low-cost and low-complexity devices.

Base stations 105 may wirelessly communicate with UEs 115 via one or more base station antennas. Base stations 105 described herein may include or may be referred to by those skilled in the art as a base transceiver station, a radio base station, an access point, a radio transceiver, a NodeB, an eNodeB (eNB), a next-generation NodeB or giga-NodeB (either of which may be referred to as a gNB), a Home NodeB, a Home eNodeB, or some other suitable terminology. Wireless communications system 100 may include base stations 105 of different types (e.g., macro or small cell base stations). The UEs 115 described herein may be able to communicate with various types of base stations 105 and network equipment including macro eNBs, small cell eNBs, gNBs, relay base stations, and the like.

Each base station 105 may be associated with a particular geographic coverage area 110 in which communications with various UEs 115 is supported. Each base station 105 may provide communication coverage for a respective geographic coverage area 110 via communication links 125, and communication links 125 between a base station 105 and a LTE 115 may utilize one or more carriers. Communication links 125 shown in wireless communications system 100 may include uplink transmissions from a UE 115 to a base station 105, or downlink transmissions from a base station 105 to a LTE 115. Downlink transmissions may also be called forward link transmissions while uplink transmissions may also be called reverse link transmissions.

The geographic coverage area 110 for a base station 105 may be divided into sectors making up a portion of the geographic coverage area 110, and each sector may be associated with a cell. For example, each base station 105 may provide communication coverage for a macro cell, a small cell, a hot spot, or other types of cells, or various combinations thereof. In some examples, a base station 105 may be movable and therefore provide communication coverage for a moving geographic coverage area 110. In some examples, different geographic coverage areas 110 associated with different technologies may overlap, and overlapping geographic coverage areas 110 associated with different technologies may be supported by the same base station 105 or by different base stations 105. The wireless communications system 100 may include, for example, a heterogeneous LTE/LTE-A/LTE-A Pro or NR network in which different types of base stations 105 provide coverage for various geographic coverage areas 110.

The term "cell" refers to a logical communication entity used for communication with a base station 105 (e.g., over a carrier), and may be associated with an identifier for distinguishing neighboring cells (e.g., a physical cell identifier (PCID), a virtual cell identifier (VCID)) operating via the same or a different carrier. In some examples, a carrier may support multiple cells, and different cells may be configured according to different protocol types (e.g., machine-type communication (MTC), narrowband Internet-of-Things (NB-IoT), enhanced mobile broadband (eMBB), or others) that may provide access for different types of devices. In some cases, the term "cell" may refer to a portion of a geographic coverage area 110 (e.g., a sector) over which the logical entity operates.

UEs 115 may be dispersed throughout the wireless communications system 100, and each UE 115 may be stationary or mobile. A UE 115 may also be referred to as a mobile device, a wireless device, a remote device, a handheld device, or a subscriber device, or some other suitable terminology, where the "device" may also be referred to as a unit, a station, a terminal, or a client. A UE 115 may be a personal electronic device such as a cellular phone, a personal digital assistant (PDA), a tablet computer, a laptop computer, or a personal computer. In some examples, a LTE 115 may also refer to a wireless local loop (WLL) station, an Internet of Things (IoT) device, an Internet of Everything (IoE) device, or an MTC device, or the like, which may be implemented in various articles such as appliances, vehicles, meters, or the like.

Some UEs 115, such as MTC or IoT devices, may be low cost or low complexity devices, and may provide for automated communication between machines (e.g., via Machine-to-Machine (M2M) communication). M2M communication or MTC may refer to data communication technologies that allow devices to communicate with one another or a base station 105 without human intervention. In some examples, M2M communication or MTC may include communications from devices that integrate sensors or meters to measure or capture information and relay that information to a central server or application program that can make use of the information or present the information to humans interacting with the program or application. Some UEs 115 may be designed to collect information or enable automated behavior of machines. Examples of applications for MTC devices include smart metering, inventory monitoring, water level monitoring, equipment monitoring, healthcare monitoring, wildlife monitoring, weather and geological event monitoring, fleet management and tracking, remote security sensing, physical access control, and transaction-based business charging.

Some UEs 115 may be configured to employ operating modes that reduce power consumption, such as half-duplex communications (e.g., a mode that supports one-way communication via transmission or reception, but not transmission and reception simultaneously). In some examples half-duplex communications may be performed at a reduced peak rate. Other power conservation techniques for UEs 115 include entering a power saving "deep sleep" mode when not engaging in active communications, or operating over a limited bandwidth (e.g., according to narrowband communications). In some cases, UEs 115 may be designed to support critical functions (e.g., mission critical functions), and a wireless communications system 100 may be configured to provide ultra-reliable communications for these functions.

In some cases, a UE 115 may also be able to communicate directly with other UEs 115 (e.g., using a peer-to-peer (P2P) or device-to-device (D2D) protocol). One or more of a group of UEs 115 utilizing D2D communications may be within the geographic coverage area 110 of a base station 105. Other UEs 115 in such a group may be outside the geographic coverage area 110 of a base station 105, or be otherwise unable to receive transmissions from a base station 105. In some cases, groups of LTEs 115 communicating via D2D communications may utilize a one-to-many (1:M) system in which each UE 115 transmits to every other UE 115 in the group. In some cases, a base station 105 facilitates the scheduling of resources for D2D communications. In other cases, D2D communications are carried out between UEs 115 without the involvement of a base station 105.

Base stations 105 may communicate with the core network 130 and with one another. For example, base stations 105 may interface with the core network 130 through backhaul links 132 (e.g., via an S1, N2, N3, or other interface). Base stations 105 may communicate with one another over backhaul links 134 (e.g., via an X2, Xn, or other interface) either directly (e.g., directly between base stations 105) or indirectly (e.g., via core network 130).

The core network 130 may provide user authentication, access authorization, tracking, Internet Protocol (IP) connectivity, and other access, routing, or mobility functions. The core network 130 may be an evolved packet core (EPC), which may include at least one mobility management entity (MME), at least one serving gateway (S-GW), and at least one Packet Data Network (PDN) gateway (P-GW). The MME may manage non-access stratum (e.g., control plane) functions such as mobility, authentication, and bearer management for UEs 115 served by base stations 105 associated with the EPC. User IP packets may be transferred through the S-GW, which itself may be connected to the P-GW. The P-GW may provide IP address allocation as well as other functions. The P-GW may be connected to the network operators IP services. The operators IP services may include access to the Internet, Intranet(s), an IP Multimedia Subsystem (IMS), or a Packet-Switched (PS) Streaming Service.

At least some of the network devices, such as a base station 105, may include subcomponents such as an access network entity, which may be an example of an access node controller (ANC). Each access network entity may communicate with UEs 115 through a number of other access network transmission entities, which may be referred to as a radio head, a smart radio head, or a transmission/reception point (TRP). In some configurations, various functions of each access network entity or base station 105 may be distributed across various network devices (e.g., radio heads and access network controllers) or consolidated into a single network device (e.g., a base station 105).

Wireless communications system 100 may operate using one or more frequency bands, typically in the range of 300 megahertz (MHz) to 300 gigahertz (GHz). Generally, the region from 300 MHz to 3 GHz is known as the ultra-high frequency (UHF) region or decimeter band, since the wavelengths range from approximately one decimeter to one meter in length. UHF waves may be blocked or redirected by buildings and environmental features. However, the waves may penetrate structures sufficiently for a macro cell to provide service to UEs 115 located indoors. Transmission of UHF waves may be associated with smaller antennas and shorter range (e.g., less than 100 km) compared to transmission using the smaller frequencies and longer waves of the high frequency (HF) or very high frequency (VHF) portion of the spectrum below 300 MHz.

Wireless communications system 100 may also operate in a super high frequency (SHF) region using frequency bands from 3 GHz to 30 GHz, also known as the centimeter band. The SHF region includes bands such as the 5 GHz industrial, scientific, and medical (ISM) bands, which may be used opportunistically by devices that may be capable of tolerating interference from other users.

Wireless communications system 100 may also operate in an extremely high frequency (EHF) region of the spectrum (e.g., from 30 GHz to 300 GHz), also known as the millimeter band. In some examples, wireless communications system 100 may support millimeter wave (mmW) communications between UEs 115 and base stations 105, and EHF antennas of the respective devices may be even smaller and more closely spaced than UHF antennas. In some cases, this may facilitate use of antenna arrays within a UE 115. However, the propagation of EHF transmissions may be subject to even greater atmospheric attenuation and shorter range than SHF or UHF transmissions. Techniques disclosed herein may be employed across transmissions that use one or more different frequency regions, and designated use of bands across these frequency regions may differ by country or regulating body.

In some cases, wireless communications system 100 may utilize both licensed and unlicensed radio frequency spectrum bands. For example, wireless communications system 100 may employ License Assisted Access (LAA), LTE-Unlicensed (LTE-U) radio access technology, or NR technology in an unlicensed band such as the 5 GHz ISM band. When operating in unlicensed radio frequency spectrum bands, wireless devices such as base stations 105 and UEs 115 may employ listen-before-talk (LBT) procedures to ensure a frequency channel is clear before transmitting data. In some cases, operations in unlicensed bands may be based on a carrier aggregation configuration in conjunction with component carriers operating in a licensed band (e.g., LAA). Operations in unlicensed spectrum may include downlink transmissions, uplink transmissions, peer-to-peer transmissions, or a combination of these. Duplexing in unlicensed spectrum may be based on frequency division duplexing (FDD), time division duplexing (TDD), or a combination of both.

In some examples, base station 105 or UE 115 may be equipped with multiple antennas, which may be used to employ techniques such as transmit diversity, receive diversity, multiple-input multiple-output (MIMO) communications, or beamforming. For example, wireless communications system 100 may use a transmission scheme between a transmitting device (e.g., a base station 105) and a receiving device (e.g., a UE 115), where the transmitting device is equipped with multiple antennas and the receiving device is equipped with one or more antennas. MIMO communications may employ multipath signal propagation to increase the spectral efficiency by transmitting or receiving multiple signals via different spatial layers, which may be referred to as spatial multiplexing. The multiple signals may, for example, be transmitted by the transmitting device via different antennas or different combinations of antennas. Likewise, the multiple signals may be received by the receiving device via different antennas or different combinations of antennas. Each of the multiple signals may be referred to as a separate spatial stream, and may carry bits associated with the same data stream (e.g., the same codeword) or different data streams. Different spatial layers may be associated with different antenna ports used for channel measurement and reporting. MIMO techniques include single-user MIMO (SU-MIMO) where multiple spatial layers are transmitted to the same receiving device, and multiple-user MIMO (MU-MIMO) where multiple spatial layers are transmitted to multiple devices.

Beamforming, which may also be referred to as spatial filtering, directional transmission, or directional reception, is a signal processing technique that may be used at a transmitting device or a receiving device (e.g., a base station 105 or a LTE 115) to shape or steer an antenna beam (e.g., a transmit beam or receive beam) along a spatial path between the transmitting device and the receiving device. Beamforming may be achieved by combining the signals communicated via antenna elements of an antenna array such that signals propagating at particular orientations with respect to an antenna array experience constructive interference while others experience destructive interference. The adjustment of signals communicated via the antenna elements may include a transmitting device or a receiving device applying certain amplitude and phase offsets to signals carried via each of the antenna elements associated with the device. The adjustments associated with each of the antenna elements may be defined by a beamforming weight set associated with a particular orientation (e.g., with respect to the antenna array of the transmitting device or receiving device, or with respect to some other orientation).

In one example, a base station 105 may use multiple antennas or antenna arrays to conduct beamforming operations for directional communications with a LTE 115. For instance, some signals (e.g. synchronization signals, reference signals, beam selection signals, or other control signals) may be transmitted by a base station 105 multiple times in different directions, which may include a signal being transmitted according to different beamforming weight sets associated with different directions of transmission. Transmissions in different beam directions may be used to identify (e.g., by the base station 105 or a receiving device, such as a UE 115) a beam direction for subsequent transmission and/or reception by the base station 105.

Some signals, such as data signals associated with a particular receiving device, may be transmitted by a base station 105 in a single beam direction (e.g., a direction associated with the receiving device, such as a UE 115). In some examples, the beam direction associated with transmissions along a single beam direction may be determined based at least in in part on a signal that was transmitted in different beam directions. For example, a LTE 115 may receive one or more of the signals transmitted by the base station 105 in different directions, and the UE 115 may report to the base station 105 an indication of the signal it received with a highest signal quality, or an otherwise acceptable signal quality. Although these techniques are described with reference to signals transmitted in one or more directions by a base station 105, a LTE 115 may employ similar techniques for transmitting signals multiple times in different directions (e.g., for identifying a beam direction for subsequent transmission or reception by the UE 115), or transmitting a signal in a single direction (e.g., for transmitting data to a receiving device).

A receiving device (e.g., a LTE 115, which may be an example of a mmW receiving device) may try multiple receive beams when receiving various signals from the base station 105, such as synchronization signals, reference signals, beam selection signals, or other control signals. For example, a receiving device may try multiple receive directions by receiving via different antenna subarrays, by processing received signals according to different antenna subarrays, by receiving according to different receive beamforming weight sets applied to signals received at a plurality of antenna elements of an antenna array, or by processing received signals according to different receive beamforming weight sets applied to signals received at a plurality of antenna elements of an antenna array, any of which may be referred to as "listening" according to different receive beams or receive directions. In some examples a receiving device may use a single receive beam to receive along a single beam direction (e.g., when receiving a data signal). The single receive beam may be aligned in a beam direction determined based at least in part on listening according to different receive beam directions (e.g., a beam direction determined to have a highest signal strength, highest signal-to-noise ratio, or otherwise acceptable signal quality based at least in part on listening according to multiple beam directions).

In some cases, the antennas of a base station 105 or UE 115 may be located within one or more antenna arrays, which may support MIMO operations, or transmit or receive beamforming. For example, one or more base station antennas or antenna arrays may be colocated at an antenna assembly, such as an antenna tower. In some cases, antennas or antenna arrays associated with a base station 105 may be located in diverse geographic locations. A base station 105 may have an antenna array with a number of rows and columns of antenna ports that the base station 105 may use to support beamforming of communications with a LTE 115. Likewise, a LTE 115 may have one or more antenna arrays that may support various MIMO or beamforming operations.

In some cases, wireless communications system 100 may be a packet-based network that operate according to a layered protocol stack. In the user plane, communications at the bearer or Packet Data Convergence Protocol (PDCP) layer may be IP-based. A Radio Link Control (RLC) layer may perform packet segmentation and reassembly to communicate over logical channels. A Medium Access Control (MAC) layer may perform priority handling and multiplexing of logical channels into transport channels. The MAC layer may also use hybrid automatic repeat request (HARQ) to provide retransmission at the MAC layer to improve link efficiency. In the control plane, the Radio Resource Control (RRC) protocol layer may provide establishment, configuration, and maintenance of an RRC connection between a UE 115 and a base station 105 or core network 130 supporting radio bearers for user plane data. At the Physical layer, transport channels may be mapped to physical channels.

In some cases, LTEs 115 and base stations 105 may support retransmissions of data to increase the likelihood that data is received successfully. HARQ feedback is one technique of increasing the likelihood that data is received correctly over a communication link 125. HARQ may include a combination of error detection (e.g., using a cyclic redundancy check (CRC)), forward error correction (FEC), and retransmission (e.g., automatic repeat request (ARQ)). HARQ may improve throughput at the MAC layer in poor radio conditions (e.g., signal-to-noise conditions). In some cases, a wireless device may support same-slot HARQ feedback, where the device may provide HARQ feedback in a specific slot for data received in a previous symbol in the slot. In other cases, the device may provide HARQ feedback in a subsequent slot, or according to some other time interval.

Time intervals in LTE or NR may be expressed in multiples of a basic time unit, which may, for example, refer to a sampling period of Tₛ = 1/30,720,000 seconds. Time intervals of a communications resource may be organized according to radio frames each having a duration of 10 milliseconds (ms), where the frame period may be expressed as T_{f} = 307,200 Tₛ. The radio frames may be identified by a system frame number (SFN) ranging from 0 to 1023. Each frame may include 10 subframes numbered from 0 to 9, and each subframe may have a duration of 1 ms. A subframe may be further divided into 2 slots each having a duration of 0.5 ms, and each slot may contain 6 or 7 modulation symbol periods (e.g., depending on the length of the cyclic prefix prepended to each symbol period). Excluding the cyclic prefix, each symbol period may contain 2048 sampling periods. In some cases, a subframe may be the smallest scheduling unit of the wireless communications system 100, and may be referred to as a transmission time interval (TTI). In other cases, a smallest scheduling unit of the wireless communications system 100 may be shorter than a subframe or may be dynamically selected (e.g., in bursts of shortened TTIs (sTTIs) or in selected component carriers using sTTIs).

In some wireless communications systems, a slot may further be divided into multiple mini-slots containing one or more symbols. In some instances, a symbol of a mini-slot or a mini-slot may be the smallest unit of scheduling. Each symbol may vary in duration depending on the subcarrier spacing or frequency band of operation, for example. Further, some wireless communications systems may implement slot aggregation in which multiple slots or mini-slots are aggregated together and used for communication between a UE 115 and a base station 105.

The term "carrier" refers to a set of radio frequency spectrum resources having a defined physical layer structure for supporting communications over a communication link 125. For example, a carrier of a communication link 125 may include a portion of a radio frequency spectrum band that is operated according to physical layer channels for a given radio access technology. Each physical layer channel may carry user data, control information, or other signaling. A carrier may be associated with a pre-defined frequency channel (e.g., an evolved universal mobile telecommunication system terrestrial radio access (E-UTRA) absolute radio frequency channel number (EARFCN)), and may be positioned according to a channel raster for discovery by UEs 115. Carriers may be downlink or uplink (e.g., in an FDD mode), or be configured to carry downlink and uplink communications (e.g., in a TDD mode). In some examples, signal waveforms transmitted over a carrier may be made up of multiple sub-carriers (e.g., using multi-carrier modulation (MCM) techniques such as orthogonal frequency division multiplexing (OFDM) or discrete Fourier transform spread OFDM (DFT-S-OFDM)).

The organizational structure of the carriers may be different for different radio access technologies (e.g., LTE, LTE-A, LTE-A Pro, NR). For example, communications over a carrier may be organized according to TTIs or slots, each of which may include user data as well as control information or signaling to support decoding the user data. A carrier may also include dedicated acquisition signaling (e.g., synchronization signals or system information, etc.) and control signaling that coordinates operation for the carrier. In some examples (e.g., in a carrier aggregation configuration), a carrier may also have acquisition signaling or control signaling that coordinates operations for other carriers.

Physical channels may be multiplexed on a carrier according to various techniques. A physical control channel and a physical data channel may be multiplexed on a downlink carrier, for example, using time division multiplexing (TDM) techniques, frequency division multiplexing (FDM) techniques, or hybrid TDM-FDM techniques. In some examples, control information transmitted in a physical control channel may be distributed between different control regions in a cascaded manner (e.g., between a common control region or common search space and one or more UE-specific control regions or LTE-specific search spaces).

A carrier may be associated with a particular bandwidth of the radio frequency spectrum, and in some examples the carrier bandwidth may be referred to as a "system bandwidth" of the carrier or the wireless communications system 100. For example, the carrier bandwidth may be one of a number of predetermined bandwidths for carriers of a particular radio access technology (e.g., 1.4, 3, 5, 10, 15, 20, 40, or 80 MHz). In some examples, each served UE 115 may be configured for operating over portions or all of the carrier bandwidth. In other examples, some LTEs 115 may be configured for operation using a narrowband protocol type that is associated with a predefined portion or range (e.g., set of subcarriers or RBs) within a carrier (e.g., "in-band" deployment of a narrowband protocol type).

In a system employing MCM techniques, a resource element may consist of one symbol period (e.g., a duration of one modulation symbol) and one subcarrier, where the symbol period and subcarrier spacing are inversely related. The number of bits carried by each resource element may depend on the modulation scheme (e.g., the order of the modulation scheme). Thus, the more resource elements that a UE 115 receives and the higher the order of the modulation scheme, the higher the data rate may be for the UE 115. In MIMO systems, a wireless communications resource may refer to a combination of a radio frequency spectrum resource, a time resource, and a spatial resource (e.g., spatial layers), and the use of multiple spatial layers may further increase the data rate for communications with a UE 115.

Devices of the wireless communications system 100 (e.g., base stations 105 or UEs 115) may have a hardware configuration that supports communications over a particular carrier bandwidth, or may be configurable to support communications over one of a set of carrier bandwidths. In some examples, the wireless communications system 100 may include base stations 105 and/or UEs 115 that support simultaneous communications via carriers associated with more than one different carrier bandwidth.

Wireless communications system 100 may support communication with a LTE 115 on multiple cells or carriers, a feature which may be referred to as carrier aggregation or multi-carrier operation. A UE 115 may be configured with multiple downlink component carriers and one or more uplink component carriers according to a carrier aggregation configuration. Carrier aggregation may be used with both FDD and TDD component carriers.

In some cases, wireless communications system 100 may utilize enhanced component carriers (eCCs). An eCC may be characterized by one or more features including wider carrier or frequency channel bandwidth, shorter symbol duration, shorter TTI duration, or modified control channel configuration. In some cases, an eCC may be associated with a carrier aggregation configuration or a dual connectivity configuration (e.g., when multiple serving cells have a suboptimal or non-ideal backhaul link). An eCC may also be configured for use in unlicensed spectrum or shared spectrum (e.g., where more than one operator is allowed to use the spectrum). An eCC characterized by wide carrier bandwidth may include one or more segments that may be utilized by UEs 115 that are not capable of monitoring the whole carrier bandwidth or are otherwise configured to use a limited carrier bandwidth (e.g., to conserve power).

In some cases, an eCC may utilize a different symbol duration than other component carriers, which may include use of a reduced symbol duration as compared with symbol durations of the other component carriers. A shorter symbol duration may be associated with increased spacing between adjacent subcarriers. A device, such as a UE 115 or base station 105, utilizing eCCs may transmit wideband signals (e.g., according to frequency channel or carrier bandwidths of 20, 40, 60, 80 MHz, etc.) at reduced symbol durations (e.g., 16.67 microseconds). A TTI in eCC may consist of one or multiple symbol periods. In some cases, the TTI duration (that is, the number of symbol periods in a TTI) may be variable.

Wireless communications system 100 may be an NR system that may utilize any combination of licensed, shared, and unlicensed spectrum bands, among others. The flexibility of eCC symbol duration and subcarrier spacing may allow for the use of eCC across multiple spectrums. In some examples, NR shared spectrum may increase spectrum utilization and spectral efficiency, specifically through dynamic vertical (e.g., across the frequency domain) and horizontal (e.g., across the time domain) sharing of resources.

In some wireless communications systems, a UE 115 may desire to achieve higher transmission efficiency (e.g., high efficiency mode) to improve LTE performance (e.g., to lower power used by the LTE 115). For example, the higher transmission efficiency may allow uplink transmissions from the LTE 115 (e.g., UE transmissions) with the uplink transmissions and/or a PA of the LTE 115 operating at or near a saturated output power (*Pₛₐₜ*) (e.g., to achieve the higher transmission efficiency) while allowing the UE 115 to fail one or more ACLR emissions (e.g., 1/2/n emissions) since the uplink transmissions may be confined to a sub-band or in-band component carrier (CC). Accordingly, the UE 115 may fail an ACLR emissions (e.g., or similar leakage emission test) based on power for an uplink transmission leaking into adjacent frequency resources (e.g., based on the uplink transmission being close to an edge of configured frequency resources allocated to the UE 115). In some cases, different UE implementations may be used for a higher transmission efficiency when failing ACLR. For example, the UE 115 may include a PA (e.g., from a class of PAs) with adaptive bias that can enable the PA to change from a linear class (e.g., class A, AB, etc.) for a higher data rate (e.g., modulation and coding scheme (MCS)) to a strongly non-linear class to support the high efficiency (e.g., class B, C, E, F+, etc.).

Additionally, wireless communications system 100 may include different types of LTEs 115 with different power requirements that can benefit from the high transmission efficiency (e.g., using an uplink sub-band high efficiency transmitter (SETI)). For example, the UEs 115 may include wearable designs (e.g., a smartwatch) that use lower frequencies (e.g., less than two (2) GHz), which result in smaller bandwidths (e.g., one (1) MHz bandwidth), low EVM waveforms, drive a PA of the UE 115 near *Pₛₐₜ,* a hard disk drive (HDD) RF front-end (RFFE), linearized communications at the base station 105 reception, or a combination thereof. Additionally, the wearable designs may include power and size constraints (e.g., limiting PA classes, batteries for the UE 115, etc.), such that the high transmission efficiency could benefit operations of the wearable design. Additionally, or alternatively, smartphone designs of the UEs 115 may include uplink transmissions to meet a high MCS transmission ACLR (e.g., not EVM limits) or low bandwidth transmission range extensions (e.g., greater than 26 dBm), linearized communications at the base station 105 reception, or a combination thereof. Accordingly, the high transmission efficiency may be desirable for the smartphone design to achieve the high MCS transmission ACLR and/or low bandwidth transmission range. Additionally, the smartphone design (e.g., or a similar handset UE 115) may use higher signal strengths and amplifiers (e.g., higher dBms) to enhance a corresponding coverage area of the UE 115, where the higher signal strengths and amplifiers benefit from the high efficiency transmission mode.

In some cases, a UE 115 may be constrained to operate in a lower PA efficiency mode even though an EVM requirement for the UE 115 is not high. The lower PA efficiency mode may ensure that the ACLR (e.g., emission limits) from the LTE 115 is not impacting other LTEs 115 in wireless communications system 100 and/or affecting neighboring bands of operation. However, if the UE 115 has several modes of operation (e.g., low efficiency, linear and high efficiency, non-linear, etc.), the LTE 115 and the network may pick the mode of operation depending on various UE requirements (e.g., coverage for a cell edge UE 115 may not require high EVM, such as for low spectral efficiency modes). Additionally, different UEs 115 (e.g., new categories of devices, smartwatches, etc.) as described above may be enabled on cellular networks that are both power and size constrained (e.g., PA class, battery, etc.).

Conventionally, the base station 105 may manage interference caused by different LTEs 115 (e.g., ACLR emissions, power jamming adjacent frequencies/users, etc.). For example, the base station 105 may include sophisticated interference cancellation to remove high efficiency transmissions (e.g., isolate the high efficiency transmissions and remove them from adjacent transmissions). Additionally, or alternatively, the base station 105 may have a simple implementation to manage the interference and choose to allow high efficiency transmissions if the LTE 115 is in a noise floor (e.g., minimal noise) and/or communications in wireless communications system 100 are unloaded.

As described herein, a LTE 115 may support two or more different modes of operation (e.g., a normal efficiency mode, a high efficiency mode as described above, etc.) either controlled by the network or the UE 115. Accordingly, additional interference may be introduced by the UE 115 operating in the new high efficiency mode of operation. However, since the high efficiency mode is done in a controlled manner, a base station 105 may account for this interference by one of several method (e.g., frequency sub-band allocated, post clean up on the base station 105, allocating lower MCS for neighboring RBs, etc.). For example, any uplink transmissions originally scheduled to occur near an edge of configured frequency resources (e.g., and, as such, may leak into an adjacent channel) may be moved (e.g., shifted) to occur on center frequency resources of the configured frequency resources. Additionally or alternatively, the base station 105 may relax requirements for ACLR emissions and/or improve interference cancellations to accommodate high efficiency transmissions from the LTE 115 (e.g., the base station 105 may allow the LTE 115 to transmit an uplink message even if the corresponding transmission power leaks into frequency resources outside of frequency resources configured for the UE 115).

Wireless communications system 100 may support efficient signaling and network operation for enabling such devices to use a high efficiency mode as described herein. For example, the techniques as described herein may allow a LTE 115 freedom of implementations for high efficiency transmissions while providing the network with signaling to perform proper scheduling, link adaptation, and interference management. For example, the UE 115 may transmit an indication, to a base station 105, of different operating modes the UE 115 is capable of using (e.g., normal transmission efficiency operating mode, high transmission efficiency operating mode, etc.). For example, the different operating modes may include different dB ranges for different levels of efficiencies (e.g., higher efficiencies have smaller dB ranges than lower efficiencies with larger dB ranges). Accordingly, based on the indication, the base station may either signal a subsequent indication for the UE to use a specific operating mode and/or an additional indication of the possible operating modes for the LTE 115 to use, where the LTE 115 determines which operating mode to use (e.g., based on an autonomous determination at the UE 115 without additional signaling from the base station 105). In some cases, the high transmission efficiency mode may be associated with a restricted bandwidth allocated for the high transmission efficiency mode, where the UE 115 determines to use the high transmission efficiency mode based on being scheduled for communications in the restricted bandwidth.

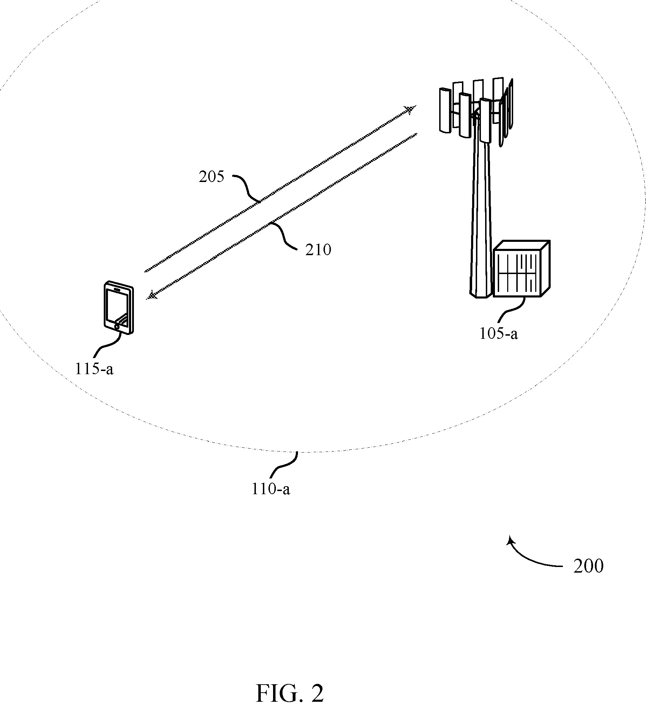

**FIG. 2** illustrates an example of a wireless communications system 200 that supports high efficiency transmission mode signaling in accordance with aspects of the present disclosure. In some examples, wireless communications system 200 may implement aspects of wireless communication system 100. In some examples base station 105-a and LTE 115-a may be in communication. LTE 115-a may send uplink transmissions 205 to base station 105-a, and base station 105-a may send downlink transmissions 210 to LTE 115-a.

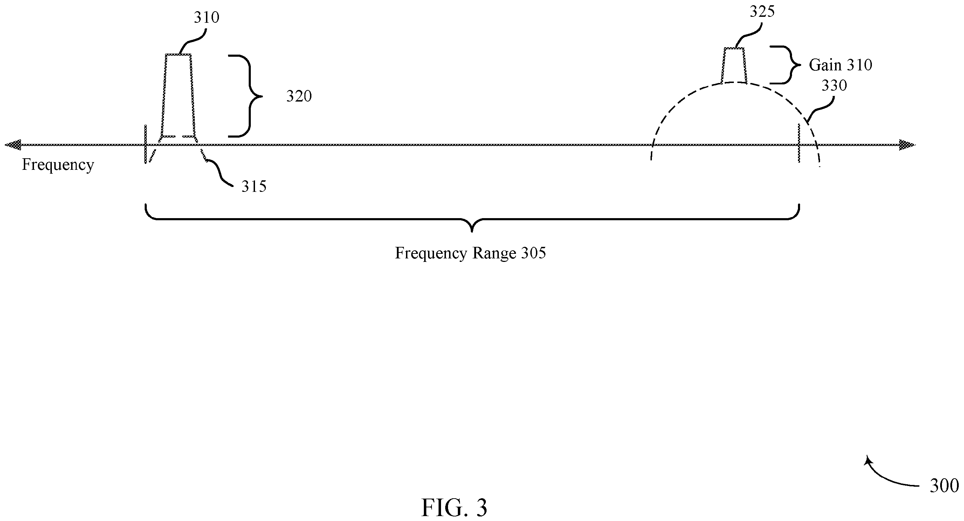

UE 115-a may be capable of communicating in one or more transmission modes. For instance, LTE 115-a may be able to send uplink transmissions 205 according to a high transmission efficiency mode and a standard (e.g., lower) transmission efficiency mode, as described in greater detail with respect to FIG. 3. UE 115-a may be able to flexibly implement high efficiency transmissions while providing base station 105-a with signaling to perform proper scheduling, link adaptation, and interference management.

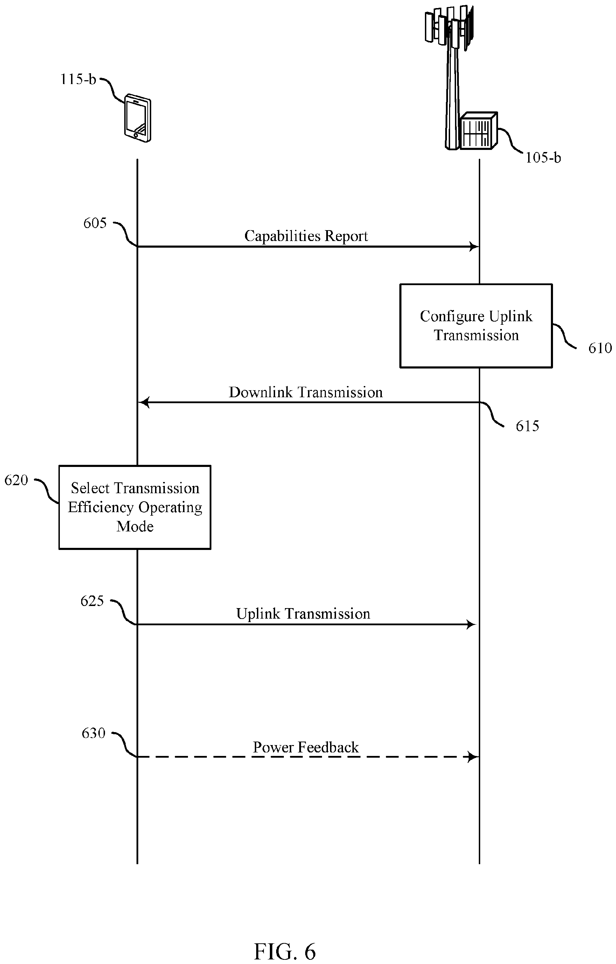

In some examples, LTE 115-a may send an uplink transmission 205 including a LTE transmission efficiency capability report, as described in greater detail with respect to FIG. 6. The transmission efficiency capability report may indicate that LTE 115-a is capable of sending subsequent uplink transmissions 205 using a first transmission efficiency mode (e.g., the high transmission efficiency mode) or a second transmission efficiency mode (e.g., the standard or normal transmission efficiency mode). In some examples the UE 115-a and base station 105-b may support three or more transmission efficiency modes (e.g., normal, medium, and high efficiency), and the concepts described herein may be extended to such cases. Base station 105-b may schedule UE 115-a via downlink transmission 210 to send subsequent uplink transmissions 205 based on the received UE transmission efficiency capability report.

**FIG. 3** illustrates an example of an operating mode 300 that supports high efficiency transmission mode signaling in accordance with aspects of the present disclosure. In some examples, operating mode 300 may implement aspects of wireless communication system 100. A LTE 115 may be configured to communicate with a base station 105 via one or more frequency ranges 305. In some examples, the UE 115 may be subject to one or more transmission restrictions. For instance, the UE 115 may be subject to a spectral mask. In such examples, the UE 115 may select an uplink transmission power to satisfy the spectral mask. Similarly, the UE 115 may be subject to one or more limitations regarding adjacent channel leakage emissions. For instance, LTE 115 may select a transmit power according to an adjacent channel leakage ratio (ACLR) limit, an error vector magnitude (EVM), or the like.

In some examples, a UE 115 may be capable of sending uplink transmissions according to a first transmission efficiency mode (e.g., high transmission efficiency mode) or a second transmission efficiency mode (e.g., a standard or normal transmission efficiency mode). For instance, a UE 115 may send a first uplink signal 310 according to a standard transmission efficiency mode. The standard transmission efficiency mode may be generated by a power amplifier (PA) at UE 115. In some examples, the first uplink signal 310 may include a carrier waveform, and an emission waveform 315. Emission waveform 315 may leak into adjacent carriers. An ACLR value may be represented by the ratio of emission waveform 315 to a carrier waveform (e.g., a portion of signal 310 that does not leak into neighboring carriers). The LTE 115 may apply a PA according to the standard transmission efficiency mode, such that the emission waveform 315 does not go outside of frequency range 305, or interfere with adjacent carriers within frequency range 305 (e.g., such that signal 310 satisfies a relevant spectral mask, and such that the emission waveform 315 satisfies an ACLR requirement, EVM requirement, or the like).

In some examples, signal 310 may be expensive with respect to power consumption. For instance, signal 310 may have a gain 320 (e.g., 30 dB) that is higher than a gain for a signal 325 which is transmitted according to a high transmission efficiency mode. UE 115 may transmit signal 310, but the signal change (e.g., gain 320) may consume more power, resulting in a rapidly depleted battery and decreased user experience. UE 115 may experience decreased power consumption by applying its PA to decrease gain 320 (e.g., to a gain 335).

In some examples, a LTE 115 may send a second uplink signal 325 according to a high transmission efficiency mode. Signal 325 may include a carrier waveform and an emission waveform 330. Signal 325 may have a gain (e.g., 12 or 18 dB) that is less than gain 320 for a standard transmission efficiency mode. This may result in decreased power expenditure and improved UE battery life. However, emission waveform 330 may result in more leakage than emission waveform 315. That is, signal 310 may be located close to the edge of frequency range 305 and, if transmitted according to the standard transmission efficiency mode, may not leak into any adjacent frequency band. If signal 325 is located the same or similar distance from the edge of frequency range 305, and is transmitted according to the high transmission efficiency mode, then emission waveform 330 may overlap with one or more adjacent frequency ranges. This may result in violation of strict ACLR standards for the adjacent frequency range.

In some examples, UE 115 may coordinate with a base station 105 to flexibly utilize both a standard transmission efficiency mode and a high transmission efficiency mode, as described in greater detail with respect to FIG. 6. For instance, the UE 115 may transmit an indication of its capability to operate in both transmission efficiency modes. The base station 105 may then schedule uplink transmissions based on the capability information. In some examples, the base station may expect transmissions sent using the high transmission efficiency mode, and may implement interference cancellation techniques to remove high transmission efficiency mode leakage and interference with other signals, for example introduced by the power amplifier on the UE 115 side biased to operate in a non-linear range (e.g., more non-linear than another operational mode of the UE 115, where the UE 115 is biased according to other parameters with relatively more linear gain behavior). Or, the UE 115 may implement analog or digital interference mitigation techniques to avoid, compensate for, offset, or otherwise decrease the effects of high transmission efficiency mode leakage. In some examples, the base station 105 may allow (e.g., schedule) high transmission efficiency mode transmissions under certain circumstances (e.g., if the LTE 115 is at a noise floor or a network is unloaded). In some examples, the base station 105 may schedule high transmission efficiency mode transmissions on a restricted frequency range 305 (e.g., a band, bandwidth, bandwidth part (BWP) subset of frequency resources, or the like) and may schedule standard transmission efficiency mode transmissions outside of the restricted frequency range 305. In such examples, UE 115 may implicitly determine whether it is scheduled to use high transmission efficiency mode or a standard (e.g., or normal) transmission efficiency mode based on the location of the resources with respect to the restricted frequency range 305. In some examples, base station 105 may indicate to the UE 115 that is allowable to determine when to use a high transmission efficiency mode. In such examples, the UE 115 may determine which transmission efficiency mode to use for scheduled uplink transmissions.

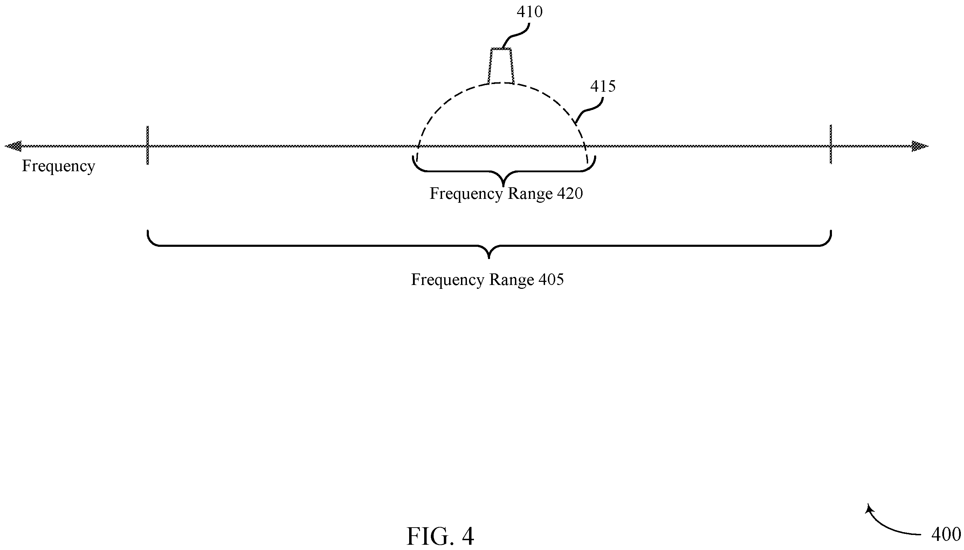

In some examples, base station 105 may opportunistically schedule high and standard transmission efficiency mode transmissions based on one or more parameters. For instance, if base station 105 is to schedule an uplink transmission near an edge of the frequency range 305, than leakage into a neighboring frequency range may not be permitted. In such examples, base station 105 may indicate to UE 115 that it should use a standard transmission efficiency mode (e.g., signal 310, because signal 325 may leak into neighboring frequency ranges). Alternatively, if the network is not loaded or overloaded, then it may schedule an uplink transmission (e.g., away from the edges of frequency range 305, as shown in greater detail with respect to FIG. 4) using a high transmission efficiency mode (e.g., signal 325).

In some examples, one or more requirements may be relaxed (e.g., at least one of the requirements may be lower for the high efficiency transmission mode than the standard efficiency transmission mode). For example, a base station 105 may schedule a UE 115 to send an uplink signal 325. Although the signal 325 may be scheduled near the edge of frequency range 305, base station 105 may still indicate (e.g., or UE 115 may determine) that UE 115 may send uplink signal 325 having emission waveform 330. In some examples, this may be possible due to the one or more relaxed requirements. For instance, base station 105 may be prepared to implement interference mitigation techniques (e.g., based on one or more parameters indicate by UE 115) to reduce the interference caused by emission waveform 330.

**FIG.** 4 illustrates an example of an operating mode 400 that supports high efficiency transmission mode signaling in accordance with aspects of the present disclosure. In some examples, operating mode 400 may implement aspects of wireless communication system 100.

A LTE 115 may signal its capability to operate in high and normal transmission efficiency modes, and a base station 105 may schedule uplink transmissions accordingly. In some examples, base station 105 may schedule an uplink signal 410, having a carrier waveform and an emission waveform 415. Base station 105 may determine one or more conditions (e.g., whether the network is loaded with respect to frequency range 405). In some examples, base station 105 may schedule uplink signal 410 away from the edges of frequency range 405 (e.g., frequency range 420 at or close to the middle of frequency range 405). In such examples, leakage into adjacent frequency ranges may be avoided. In some examples, base station 105 may allocate a set of resources (e.g., frequency resources of frequency range 405) and may allow UE 115 to determine which transmission efficiency mode to use. UE 115 may use all or most of the frequency resources of frequency range 405 to send an uplink signal using the standard transmission efficiency mode. In other examples, UE 115 may select a subset of the resources (e.g., a middle set of resources) and may send signal 410 according to the high transmission efficiency mode.

In some examples, UE 115 may identify a subset of frequency range 405 (e.g., frequency range 420) as a restricted frequency range (e.g., a restricted bandwidth, BWP, or the like). If base station 105 schedules an uplink transmission outside of frequency range 420, then LTE 115 may send the uplink transmission according to a standard transmission efficiency mode. If base station 105 schedules the uplink transmission within frequency range 420, then LTE 115 may send the uplink transmission (e.g., signal 410) according to a high transmission efficiency mode.

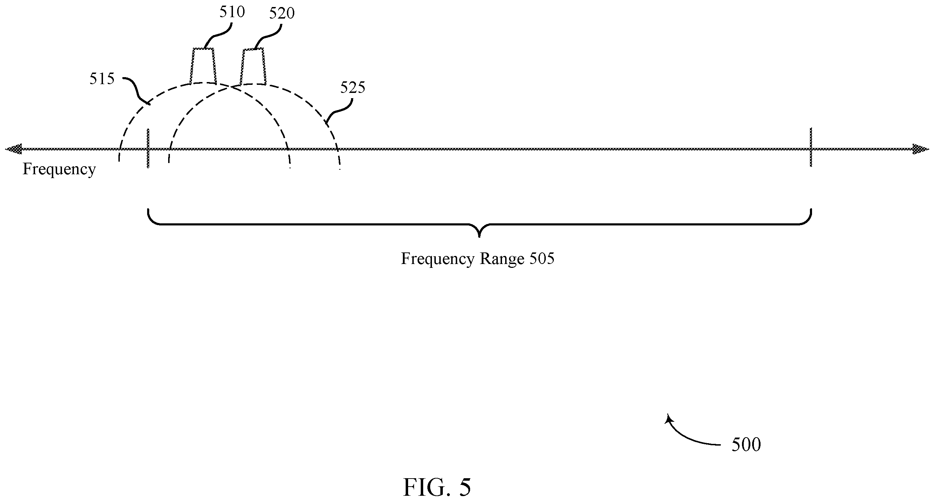

**FIG. 5** illustrates an example of an operating mode 500 that supports high efficiency transmission mode signaling in accordance with aspects of the present disclosure. In some examples, operating mode 500 may implement aspects of wireless communication system 100.

In some examples, base station 105 may schedule or permit the UE 115 to send one or more adjacent uplink signals according to a high transmission efficiency mode. For example, base station 105 may schedule uplink signal 510 on a first carrier within frequency range 505 and may schedule uplink signal 520 on an adjacent or nearby second carrier within frequency range 505. If LTE 115 transmits signals 510 and 520 according to a high transmission efficiency mode, then first signal 510 may include an emissions waveform 515 and second signal 520 may include an emissions waveform 525. Emissions waveform 515 may leak into the second carrier, causing interference with signal 520, and emissions waveform 525 may leak into the first carrier, causing interference with signal 510.

In some examples, base station 105 may perform one or more interference cancellation procedures to mitigate the effects of emissions leakage. In such examples, UE 115 may benefit from decreased power consumption and improved overall efficiency.

**FIG. 6** illustrates an example of a process flow 600 that supports high efficiency transmission mode signaling in accordance with aspects of the present disclosure. In some examples, process flow 600 may implement aspects of wireless communication system 100.

In some examples, a LTE 115-b may be capable of operating according to a first (e.g., standard) transmission efficiency operating mode and a second (e.g., high) transmission efficiency operating mode. The first transmission efficiency operating mode may correspond to a first capability associated with emissions (e.g., less linear PA operations, resulting in increased channel leakage and decreased power expenditure) and the second transmission efficiency operating mode may correspond to a second capability associated with emissions (e.g., highly linear PA operations resulting in decreased channel leakage and increased power expenditure). Power efficiency of operating modes may or may not be specified. In some examples, capabilities reports may include power efficiency information. In some examples, power efficiency information (e.g., for different transmission efficiency operating modes) may be predefined at UE 115-b and base station 105-b. In some examples, the capabilities report may include relaxation information (e.g., ACLR, EVM, or the like) for high transmission efficiency operating mode relative to a standard transmission efficiency operating mode. In some examples, UE 115-b and base station 105-b may identify (e.g., based on standardized predefined information) what relaxation information (e.g., how relaxed ACLR requirements, EVM requirements, or other requirements are) corresponds to each transmission efficiency operating mode.

At 605, UE 115-a may transmit, to base station 105-b, a capabilities report. The capabilities report may include an indication of a capability of the UE 115-a to operate according to the standard transmission efficiency operating mode and the high transmission efficiency operating mode. In some examples, the indication of the capability may be an index corresponding to an entry in a table (e.g., a lookup table) providing LTE categories or efficiency modes. For example a first entry indicated by a first index may correspond to the UE's capability to operate according to the high efficiency transmission operation mode. A second entry indicated by a second index may correspond to the UE's capability to operate according to a standard efficiency transmission mode. Additional such efficiency transmission modes may be defined and correspond to additional indices. Each indexed entry in the table may provide an indication of the UE capabilities associated with the corresponding index, and may additionally or alternatively provide specific values associated with capabilities of UE 115-a for the index. The above-described table (e.g., lookup table) may be predetermined at the UE 115-a, or may have been previously provided to the UE 115-a by the network (e.g., by base station 105-b), for example in RRC signaling.

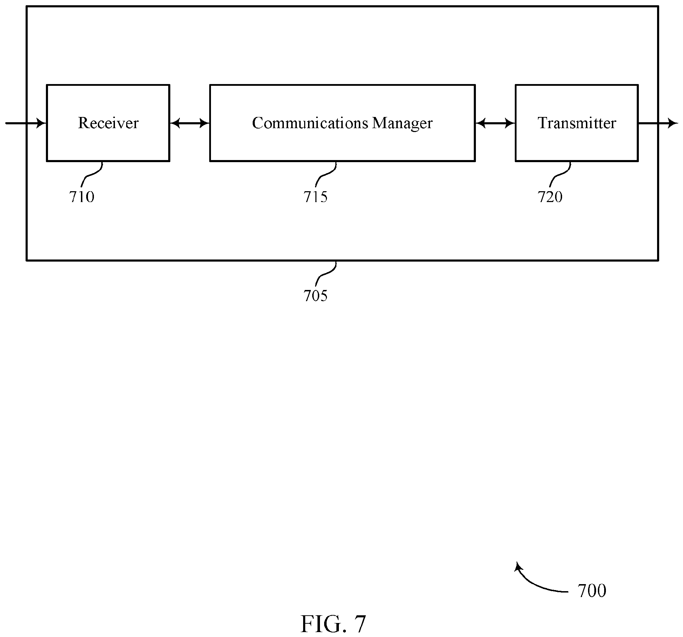

In some cases, the indicated capabilities may be one or more specific values associated with hardware capabilities of UE 115-a, or channel conditions reported by UE 115-a, or other parameters indicating a state of the UE, as further described herein. In some examples, one or more of these values may be signaled in combination with an index corresponding to a table entry. The operations at 605 may be performed by an operating mode capability component as described with reference to FIGs. 7 through 10.

In some examples, ACLR and EVM requirements may be different (e.g., relaxed) for high transmission efficiency operating mode transmissions. This may allow base station 105-b may configure uplink transmission at 610 based on high transmission efficiency operating modes, standard transmission efficiency operating modes, or both.

In some examples, where a LTE 115-a is capable of using a high transmission efficiency operating mode, PA parametrization may be sent for digital post distortion (dPOD). UE 115-b may use a PA to send signals using the high transmission efficiency operating mode. the PA may be modeled with polynomial or Volterra models. Coefficients of non-linear model may be sent to base station 105-b (e.g., in the capabilities report at 605) for predistortion reduction and/or mitigation. Base station 105-b may use such information at 630 to reduce interference for a high transmission efficiency operating mode signal.

At 615, base station 105-b may send a downlink transmission. The downlink transmission may include one or more uplink grants, an indication of which transmission efficiency operating mode to use, an indication that the LTE may select a transmission efficiency operating mode, one or more relaxed parameters, or the like.

In some examples, high transmission efficiency operating modes may be used in a restricted bandwidth. For instance, high transmission efficiency operating modes may be allowed for (or expected of) UE 115-b if an uplink transmission is configured to be scheduled in a restricted bandwidth (e.g., with a particular BWP). In some examples, a high transmission efficiency operating mode may be permitted for (or expected of) UE 115-b if the uplink transmission is scheduled with in a restricted bandwidth. In such examples, if base station 105-b schedules UE 115-b with an uplink transmission on a scheduled bandwidth, BWP, or the like at 615, then UE 115-b may implicitly determine to send the scheduled uplink transmission according to the high transmission efficiency operating mode at 625. Similarly, base station 105-b may monitor for and receive an uplink transmission at 625 according to the high transmission efficiency operating mode. In such examples, configuration for restricted bandwidths may be persistent, such that UE 115-b may pursue more aggressive power savings if possible. Similarly, savings may be achieved if UE 15-b is scheduled with sufficient gaps between resource allocations in the high transmission efficiency operating mode or the standard transmission efficiency operating mode. Transitions from a restricted bandwidth or BWP configuration to another configuration may include a delay (e.g., a BWP switch delay or bandwidth switch delay, etc.). Thus, base station 105-b may accommodate timing delays when scheduling uplink transmissions at 615. For a restricted bandwidth dynamically indicated in an uplink grant at 615, base station 105-b may ensure that a timing delay value (e.g., K2) is large enough to accommodate the latency for transition between high transmission efficiency operating mode and standard transmission efficiency operating mode. Base station 105-b may ensure that there is no overlapping in uplink scheduling with different modes (e.g., a previous mode uplink scheduling may need to be flushed or cleared before a scheduling grant for another mode is issued).

In some examples, a network may control which transmission efficiency operating mode LTE 115-b uses. Base station 105-b may signal (e.g., at 615) which transmission efficiency operating mode UE 115-b should use. In such examples, at 620, UE 115-b may select its mode based on the explicit indication. ACLR and EVM may follow the selected transmission efficiency operating mode. That is, LTE 115-b may send an uplink transmission at 625 according to an explicitly indicated transmission efficiency operating mode, and the ACLR, EVM, or other leakage values may correspond to the selected transmission efficiency operating mode. Base station 105-b may monitor for and receive the uplink transmission at 625 based on the explicitly indicated transmission efficiency operating mode, and may expect corresponding ACLR, EVM, or other leakage. Base station 105-b may indicate the transmission efficiency operating mode on a per scheduling grant basis, may indicate the transmission efficiency operating mode via semi-persistence with L1-signaling, via MAC CE signaling, or other downlink transmissions. Such signaling may be dynamically done (e.g., per scheduling grant), and in such examples base station 105-b may separately request that UE 115-b send one or more SRSs according to high transmission efficiency operating mode or standard transmission efficiency operating mode.

In some examples, UE 115-b may control which transmission efficiency operating mode it uses for uplink transmissions. In such examples, base station 105-b may indicate (e.g., at 615) whether UE 15-b may choose to operate using high transmission efficiency operating mode or normal transmission efficiency operating mode, or whether UE 115-b may only use normal transmission efficiency operating mode. If base station 105-b indicates that UE 115-b may only use standard transmission efficiency operating mode, then UE 115-b may send uplink transmission at 625 using the standard transmission efficiency operating mode. If, however, base station 105-b indicates that LTE 115-b may subsequently choose whether to use high transmission efficiency operating mode or standard transmission efficiency operating mode, then UE 115-b may dynamically choose a transmission efficiency operating mode based on one or more conditions. ACLR and EVM values may follow the selected transmission efficiency operating mode, and base station 105-b may be capable of sustaining the relaxed ACLR and EVM requirements.

UE 115-b may choose not to use high transmission efficiency operating mode based on one or more factors. For instance, LTE 115-b may determine that high transmission efficiency operating mode is not actually as efficient based on other network configurations, etc.). The indication of whether UE 115-b may choose a transmission efficiency operating mode or not may be sent dynamically (e.g., per scheduling grant) or semi-persistently with MAC CE activation.

When base station 105-b indicates that LTE 115-b may choose a transmission efficiency operating mode, then UE 115-b may choose how to transmit a signal within the frequency domain allocation (e.g., in high transmission efficiency operating mode or standard transmission efficiency operating mode). UE 115-b may choose not to transmit the signal occupying the entire frequency allocation to facilitate high transmission efficiency operating mode. For instance, if base station 105-b allocates 25 contiguous resource blocks (RBs) to LTE 115-b for an uplink transmission, UE 115-b may determine to transmit in high transmission efficiency operating mode and may only transmit the signal in the center five RBs of the 25 RB allocation. LTE 115-b may be configured with multiple transmission efficiency operating mode or multiple frequency allocation options, or both, and LTE 115-b may autonomously determine which combination of transmission efficiency operating modes and frequency resources to use. In such examples, base station 105-b may perform hypothesis testing to detect which option was used by UE 115-b at 625. In some examples, UE 115-b may signal (e.g., in uplink control information (UCI) by UE 115-b on which option was used or will be used or is to be used. LTE 115-b may improve power efficiency by autonomously making such selections because LTE 115-b may be more aware of which configuration will save it the most power than base station 105-b.

At 620, UE 115-a may select a mode for an uplink transmission, based at least in part on the capabilities report and the downlink transmission received at 620, as described above. UE 115-a may select the transmission efficiency operating mode using an efficiency operating transmission component as described with reference to FIGs. 7 through 10.

At 625, UE 115-b may transmit, to base station 105-b, according to the standard transmission efficiency operating mode or the high transmission efficiency operating mode, an uplink transmission based at least in part on the transmitted indication of the capability and the information received in downlink transmission 615. Various embodiments of the above described techniques are described in greater detail below.

In some examples, UE 115-b may provide some assistance information to base station 105-b. For instance, at 630, UE 115-b may transmit power feedback. UE 115-b may indicate to base station 105-b whether scheduling decisions are, have been, or are predicted to be, power efficient. If base station 105-b receives no such indication, then there may be a closed loop on whether the network is actually saving power for UE 115-b during the data transfer (e.g., from a transmit chain perspective). For example, transmission implementations, scheduling decisions, re-transmissions, etc., may be sub-optimally run or performed. Upon receiving power feedback information at 630, base station 105-b may determine whether transmission efficiency operating mode options are improving power for LTE 115-b, and may configure UE 115-b similarly, the same, or differently based thereon (e.g., may send different explicit indications, or may change whether it allows LTE 115-b to select high transmission efficiency operating mode). Operations described with reference to 625 and 630 may be performed by an efficiency operating transmission component as described with reference to FIGs. 7 through 10.

**FIG.** 7 shows a block diagram 700 of a device 705 that supports high efficiency transmission mode signaling in accordance with aspects of the present disclosure. The device 705 may be an example of aspects of a UE 115 as described herein. The device 705 may include a receiver 710, a communications manager 715, and a transmitter 720. The device 705 may also include a processor. Each of these components may be in communication with one another (e.g., via one or more buses).

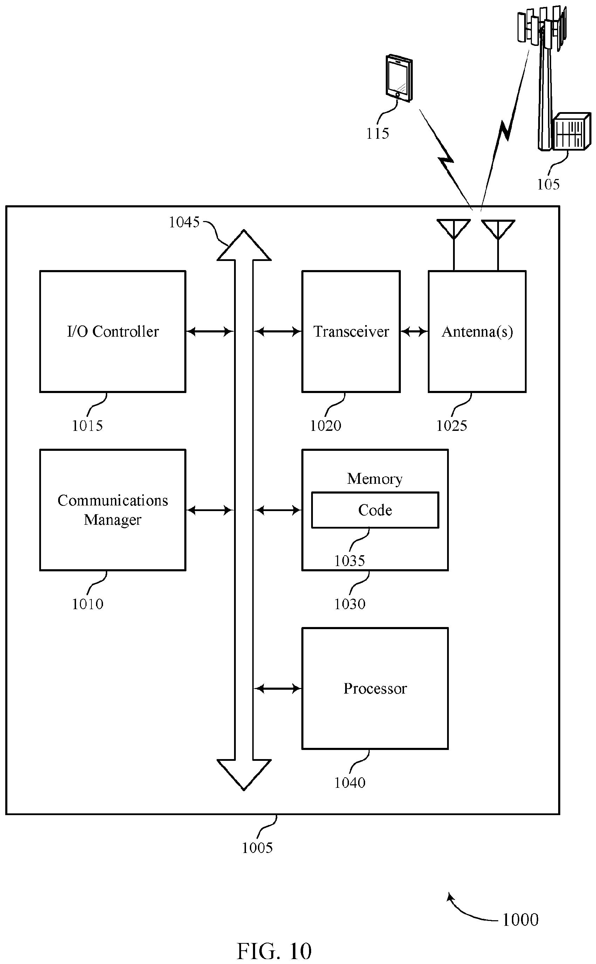

The receiver 710 may receive information such as packets, user data, or control information associated with various information channels (e.g., control channels, data channels, and information related to high efficiency transmission mode signaling, etc.). Information may be passed on to other components of the device 705. The receiver 710 may be an example of aspects of the transceiver 1020 described with reference to FIG. 10. The receiver 710 may utilize a single antenna or a set of antennas.

The communications manager 715 may transmit, to a base station, an indication of a capability of the UE to operate according to the first transmission efficiency operating mode and the second transmission efficiency operating mode and transmit to the base station according to the first transmission efficiency operating mode or the second transmission efficiency operating mode based on the transmitted indication of the capability. The communications manager 715 may be an example of aspects of the communications manager 1010 described herein.

The communications manager 715, or its sub-components, may be implemented in hardware, code (e.g., software or firmware) executed by a processor, or any combination thereof. If implemented in code executed by a processor, the functions of the communications manager 715, or its sub-components may be executed by a general-purpose processor, a digital signal processor (DSP), an application-specific integrated circuit (ASIC), a field programmable gate array (FPGA) or other programmable logic device, discrete gate or transistor logic, discrete hardware components, or any combination thereof designed to perform the functions described in the present disclosure.

The communications manager 715, or its sub-components, may be physically located at various positions, including being distributed such that portions of functions are implemented at different physical locations by one or more physical components. In some examples, the communications manager 715, or its sub-components, may be a separate and distinct component in accordance with various aspects of the present disclosure. In some examples, the communications manager 715, or its sub-components, may be combined with one or more other hardware components, including but not limited to an input/output (I/O) component, a transceiver, a network server, another computing device, one or more other components described in the present disclosure, or a combination thereof in accordance with various aspects of the present disclosure.

The transmitter 720 may transmit signals generated by other components of the device 705. In some examples, the transmitter 720 may be collocated with a receiver 710 in a transceiver module. For example, the transmitter 720 may be an example of aspects of the transceiver 1020 described with reference to FIG. 10. The transmitter 720 may utilize a single antenna or a set of antennas.

In some examples, the communications manager 715 may be implemented as an integrated circuit or chipset for a mobile device modem, and the receiver 710 and transmitter 720 may be implemented as analog components (e.g., amplifiers, filters, antennas) coupled with the mobile device modem to enable wireless transmission and reception over one or more bands.

The communications manager 715 as described herein may be implemented to realize one or more potential advantages. One implementation may allow the device to decrease power consumption, conserve battery power, extend batter life, and improve overall device efficiency, resulting in improved user experience.

Based on techniques for efficiently communicating maximum number of layers for a device as described herein, a processor of a UE 115 (e.g., controlling the receiver 710, the transmitter 720, or a transceiver 1020 as described with respect to FIG. 10) may increase system efficiency and decrease unnecessary processing at a device.

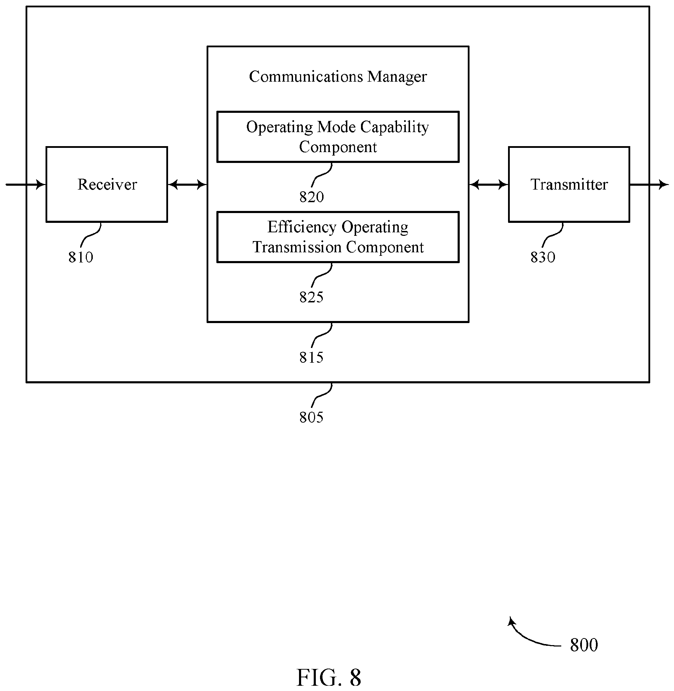

**FIG.** 8 shows a block diagram 800 of a device 805 that supports high efficiency transmission mode signaling in accordance with aspects of the present disclosure. The device 805 may be an example of aspects of a device 705, or a UE 115 as described herein. The device 805 may include a receiver 810, a communications manager 815, and a transmitter 830. The device 805 may also include a processor. Each of these components may be in communication with one another (e.g., via one or more buses). The device 805 may be capable of operating according to a first transmission efficiency operating mode and a second transmission efficiency operating mode, the first transmission efficiency operating mode corresponding to a first capability associated with emissions, and the second transmission efficiency operating mode corresponding to a second capability associated with emissions. Either or both of the first capability associated with emissions may be an adjacent channel leakage ratio, or an error vector magnitude, or both.

The receiver 810 may receive information such as packets, user data, or control information associated with various information channels (e.g., control channels, data channels, and information related to high efficiency transmission mode signaling, etc.). Information may be passed on to other components of the device 805. The receiver 810 may be an example of aspects of the transceiver 1020 described with reference to FIG. 10. The receiver 810 may utilize a single antenna or a set of antennas.

The communications manager 815 may be an example of aspects of the communications manager 715 as described herein. The communications manager 815 may include an operating mode capability component 820 and an efficiency operating transmission component 825. The communications manager 815 may be an example of aspects of the communications manager 1010 described herein.

The operating mode capability component 820 may transmit, to a base station, an indication of a capability of the UE to operate according to the first transmission efficiency operating mode and the second transmission efficiency operating mode.

The efficiency operating transmission component 825 may transmit to the base station according to the first transmission efficiency operating mode or the second transmission efficiency operating mode based on the transmitted indication of the capability.

The transmitter 830 may transmit signals generated by other components of the device 805. In some examples, the transmitter 830 may be collocated with a receiver 810 in a transceiver module. For example, the transmitter 830 may be an example of aspects of the transceiver 1020 described with reference to FIG. 10. The transmitter 830 may utilize a single antenna or a set of antennas.

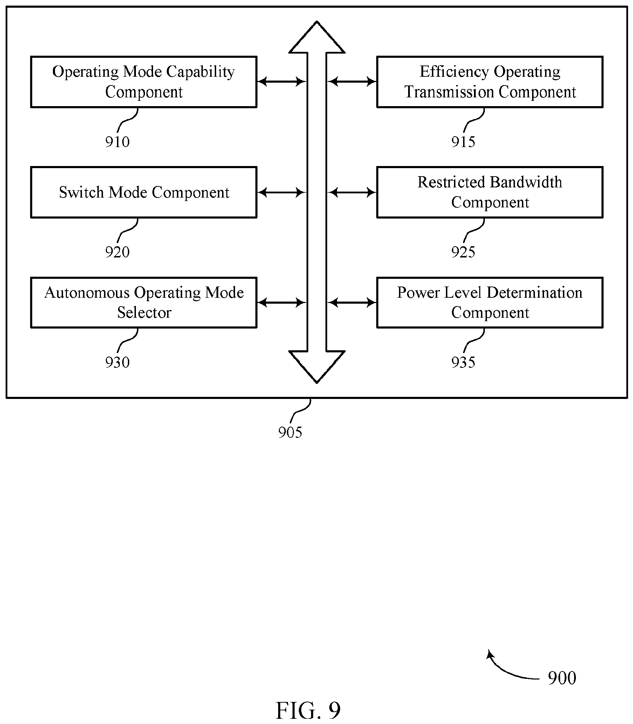

**FIG.** 9 shows a block diagram 900 of a communications manager 905 that supports high efficiency transmission mode signaling in accordance with aspects of the present disclosure. The communications manager 905 may be an example of aspects of a communications manager 715, a communications manager 815, or a communications manager 1010 described herein. The communications manager 905 may include an operating mode capability component 910, an efficiency operating transmission component 915, a switch mode component 920, a restricted bandwidth component 925, an autonomous operating mode selector 930, and a power level determination component 935. Each of these modules may communicate, directly or indirectly, with one another (e.g., via one or more buses).

The operating mode capability component 910 may transmit, to a base station, an indication of a capability of the UE to operate according to the first transmission efficiency operating mode and the second transmission efficiency operating mode.

In some cases, the indication of the capability includes a first index identifying the first transmission efficiency operating mode, or a second index identifying the second transmission efficiency operating mode, or a combination thereof.

In some cases, the indication of the capability includes a value for each of a set of parameters for the UE that are associated with the first transmission efficiency operating mode, or the second index identifying the second transmission efficiency operating mode, or a combination thereof.

In some cases, the set of parameters include one or more of a power headroom, or a maximum power reduction, or an indication of an antenna configuration, or a battery level, or an adjacent channel leakage ratio, or an error vector magnitude, or a specific absorption rate, or a maximum permissible exposure, or a switching speed or latency between the first transmission efficiency operating mode and the second transmission efficiency operating mode, or a transmission bandwidth for the first or second transmission efficiency operating mode.

As used herein a Specific Absorption Rate (SAR) may be a measure of the rate at which energy is absorbed by the human body when exposed to a radio frequency (RF) electromagnetic field. SAR can also refer to absorption of other forms of energy by tissue, including ultrasound. SAR may be defined as the power absorbed per mass of tissue and has units of watts per kilogram (W/kg).

As used herein, Maximum Permissible Exposure (MPE) may be a measure related to the total RF exposure, which can include both SAR and energy density.

The efficiency operating transmission component 915 may transmit to the base station according to the first transmission efficiency operating mode or the second transmission efficiency operating mode based on the transmitted indication of the capability.

In some examples, the efficiency operating transmission component 915 may receive, from the base station, a grant of uplink resources in a first bandwidth.

In some examples, the efficiency operating transmission component 915 may identify that the first bandwidth is associated with the first transmission efficiency operating mode.

In some examples, the efficiency operating transmission component 915 may transmit, to the base station, on the uplink resources according to the first transmission efficiency operating mode based on the identifying.

In some examples, the efficiency operating transmission component 915 may receive, from the base station, an indication for the UE to use the first transmission efficiency operating mode.

In some examples, the efficiency operating transmission component 915 may transmit to the base station according to the first transmission efficiency operating mode based on the received indication.

In some examples, the efficiency operating transmission component 915 may receive the indication in a configuration, a scheduling grant, a semi-persistent layer 1 signaling, or a MAC control element.

In some examples, the efficiency operating transmission component 915 may receive, from the base station, an instruction for the UE to transmit sounding reference signals using the first transmission efficiency operating mode.

In some examples, the efficiency operating transmission component 915 may transmit the sounding reference signals according to the first transmission efficiency operating mode.

The switch mode component 920 may transmit, to the base station, according to the first transmission efficiency operating mode.

In some examples, the switch mode component 920 may determine to switch to transmitting according to the second transmission efficiency operating mode.

In some examples, the switch mode component 920 may transmit, to the base station, according to the second transmission efficiency operating mode based on the determining.

In some examples, the switch mode component 920 may receive, from the base station, a command to switch to the second transmission efficiency operating mode.

In some examples, the switch mode component 920 may determine to switch to transmitting according to the second transmission efficiency operating mode in response the received command.

In some examples, the switch mode component 920 may identify, by the UE, a change in one or more UE operating condition.

In some examples, the switch mode component 920 may determine, by the LTE, to switch to transmitting according to the second transmission efficiency operating mode based on the identified change.

The restricted bandwidth component 925 may receive, from the base station, a configuration identifying a first bandwidth for the UE.

In some examples, the restricted bandwidth component 925 may identify that the first bandwidth configured for the UE is associated with the first transmission efficiency operating mode.

In some examples, the restricted bandwidth component 925 may determine to operate according to the first transmission efficiency operating mode based on the identifying.

In some cases, the configuration of the first bandwidth including a first bandwidth part configuration for the UE.

The autonomous operating mode selector 930 may receive, from the base station, an indication that the UE is permitted to select one of the first transmission efficiency operating mode or the second transmission efficiency operating mode.

In some examples, the autonomous operating mode selector 930 may select, based on the received indication, to transmit according to the first transmission efficiency operating mode.

In some examples, the autonomous operating mode selector 930 may transmit to the base station according to the selected first transmission efficiency operating mode.

In some examples, the autonomous operating mode selector 930 may receive the indication in a configuration, a scheduling grant, a semi-persistent layer 1 signaling, or a MAC control element.

According to the invention, the power level determination component 935 identifies a frequency allocation for uplink transmission by the LTE, the frequency allocation including a set of resource blocks.

The power level determination component 935 determines that a power level associated with using the first transmission efficiency operating mode for the frequency allocation is less than a power associated with using the second transmission efficiency operating mode for the frequency allocation.

The power level determination component 935 selects, by the UE, a subset of the set of resource blocks for transmission according to the first transmission efficiency operating mode based on the determining.

**FIG. 10** shows a diagram of a system 1000 including a device 1005 that supports high efficiency transmission mode signaling in accordance with aspects of the present disclosure. The device 1005 may be an example of or include the components of device 705, device 805, or a LTE 115 as described herein. The device 1005 may include components for bi-directional voice and data communications including components for transmitting and receiving communications, including a communications manager 1010, an I/O controller 1015, a transceiver 1020, one or more antennas 1025, memory 1030, and a processor 1040. These components may be in electronic communication via one or more buses (e.g., bus 1045). The device 1005 may be capable of operating according to a first transmission efficiency operating mode and a second transmission efficiency operating mode, the first transmission efficiency operating mode corresponding to a first capability associated with emissions, and the second transmission efficiency operating mode corresponding to a second capability associated with emissions. Either or both of the first capability associated with emissions may be an adjacent channel leakage ratio, or an error vector magnitude, or both.

The communications manager 1010 may transmit, to a base station, an indication of a capability of the UE to operate according to the first transmission efficiency operating mode and the second transmission efficiency operating mode and transmit to the base station according to the first transmission efficiency operating mode or the second transmission efficiency operating mode based on the transmitted indication of the capability.

The I/O controller 1015 may manage input and output signals for the device 1005. The I/O controller 1015 may also manage peripherals not integrated into the device 1005. In some cases, the I/O controller 1015 may represent a physical connection or port to an external peripheral. In some cases, the I/O controller 1015 may utilize an operating system such as iOS^{®}, ANDROID^{®}, MS-DOS^{®}, MS-WINDOWS^{®}, OS/2^{®}, UNIX^{®}, LINUX^{®}, or another known operating system. In other cases, the I/O controller 1015 may represent or interact with a modem, a keyboard, a mouse, a touchscreen, or a similar device. In some cases, the I/O controller 1015 may be implemented as part of a processor. In some cases, a user may interact with the device 1005 via the I/O controller 1015 or via hardware components controlled by the I/O controller 1015.

The transceiver 1020 may communicate bi-directionally, via one or more antennas, wired, or wireless links as described above. For example, the transceiver 1020 may represent a wireless transceiver and may communicate bi-directionally with another wireless transceiver. The transceiver 1020 may also include a modem to modulate the packets and provide the modulated packets to the antennas for transmission, and to demodulate packets received from the antennas.

In some cases, the wireless device may include a single antenna 1025. However, in some cases the device may have more than one antenna 1025, which may be capable of concurrently transmitting or receiving multiple wireless transmissions. In some cases, antennas 1025 may be a group of antennas or one or more antenna arrays.

The memory 1030 may include random-access memory (RAM) and read-only memory (ROM). The memory 1030 may store computer-readable, computer-executable code 1035 including instructions that, when executed, cause the processor to perform various functions described herein. In some cases, the memory 1030 may contain, among other things, a basic input and output system (BIOS) which may control basic hardware or software operation such as the interaction with peripheral components or devices.

The processor 1040 may include an intelligent hardware device, (e.g., a general-purpose processor, a DSP, a CPU, a microcontroller, an ASIC, an FPGA, a programmable logic device, a discrete gate or transistor logic component, a discrete hardware component, or any combination thereof). In some cases, the processor 1040 may be configured to operate a memory array using a memory controller. In other cases, a memory controller may be integrated into the processor 1040. The processor 1040 may be configured to execute computer-readable instructions stored in a memory (e.g., the memory 1030) to cause the device 1005 to perform various functions (e.g., functions or tasks supporting high efficiency transmission mode signaling).

The code 1035 may include instructions to implement aspects of the present disclosure, including instructions to support wireless communications. The code 1035 may be stored in a non-transitory computer-readable medium such as system memory or other type of memory. In some cases, the code 1035 may not be directly executable by the processor 1040 but may cause a computer (e.g., when compiled and executed) to perform functions described herein.

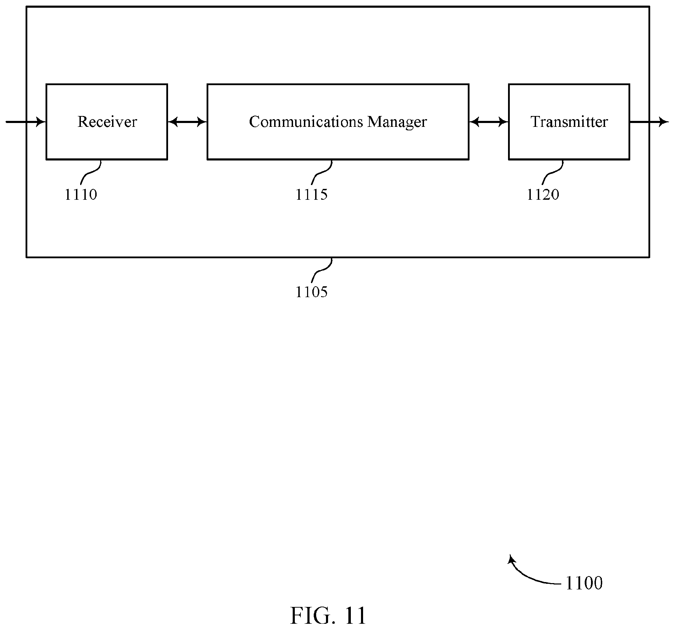

**FIG. 11** shows a block diagram 1100 of a device 1105 that supports high efficiency transmission mode signaling in accordance with aspects of the present disclosure. The device 1105 may be an example of aspects of a base station 105 as described herein. The device 1105 may include a receiver 1110, a communications manager 1115, and a transmitter 1120. The device 1105 may also include a processor. Each of these components may be in communication with one another (e.g., via one or more buses).

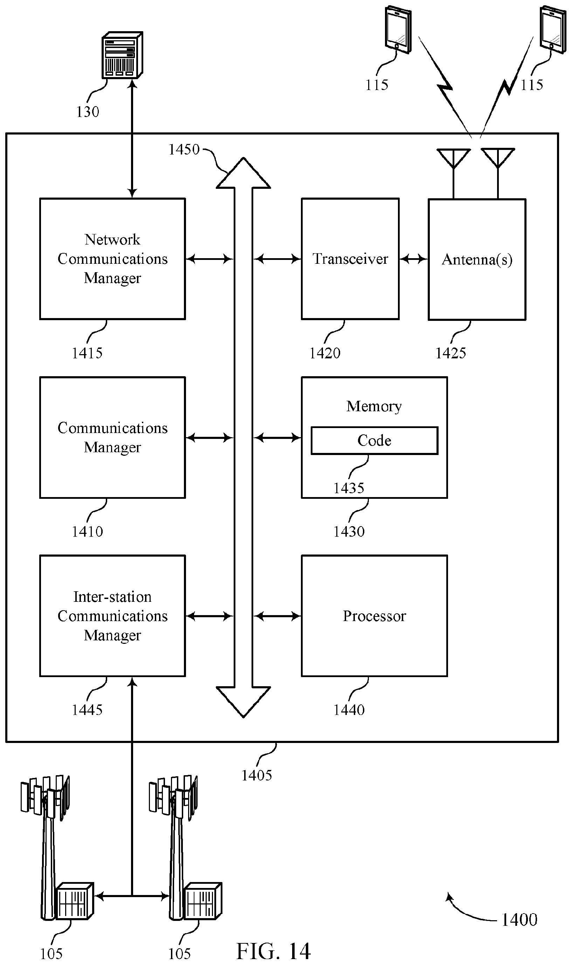

The receiver 1110 may receive information such as packets, user data, or control information associated with various information channels (e.g., control channels, data channels, and information related to high efficiency transmission mode signaling, etc.). Information may be passed on to other components of the device 1105. The receiver 1110 may be an example of aspects of the transceiver 1420 described with reference to FIG. 14. The receiver 1110 may utilize a single antenna or a set of antennas.

The communications manager 1115 may receive, from a UE, an indication of a capability of the UE to operate according to a first transmission efficiency operating mode and a second transmission efficiency operating mode, the first transmission efficiency operating mode corresponding to a first capability associated with emissions and the second transmission efficiency operating mode corresponding to a second capability associated with emissions that is relaxed relative to the first capability associated with emissions and receive signals from the UE according to the first transmission efficiency operating mode or the second transmission efficiency operating mode based on the received indication of the capability. The communications manager 1115 may be an example of aspects of the communications manager 1410 described herein.

The communications manager 1115, or its sub-components, may be implemented in hardware, code (e.g., software or firmware) executed by a processor, or any combination thereof. If implemented in code executed by a processor, the functions of the communications manager 1115, or its sub-components may be executed by a general-purpose processor, a DSP, an application-specific integrated circuit (ASIC), a FPGA or other programmable logic device, discrete gate or transistor logic, discrete hardware components, or any combination thereof designed to perform the functions described in the present disclosure.

The communications manager 1115, or its sub-components, may be physically located at various positions, including being distributed such that portions of functions are implemented at different physical locations by one or more physical components. In some examples, the communications manager 1115, or its sub-components, may be a separate and distinct component in accordance with various aspects of the present disclosure. In some examples, the communications manager 1115, or its sub-components, may be combined with one or more other hardware components, including but not limited to an input/output (I/O) component, a transceiver, a network server, another computing device, one or more other components described in the present disclosure, or a combination thereof in accordance with various aspects of the present disclosure.

The transmitter 1120 may transmit signals generated by other components of the device 1105. In some examples, the transmitter 1120 may be collocated with a receiver 1110 in a transceiver module. For example, the transmitter 1120 may be an example of aspects of the transceiver 1420 described with reference to FIG. 14. The transmitter 1120 may utilize a single antenna or a set of antennas.

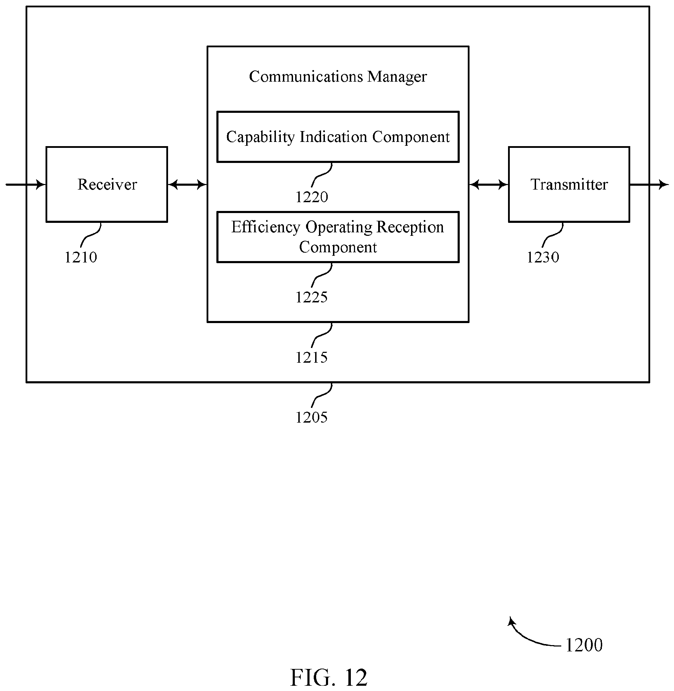

**FIG. 12** shows a block diagram 1200 of a device 1205 that supports high efficiency transmission mode signaling in accordance with aspects of the present disclosure. The device 1205 may be an example of aspects of a device 1105, or a base station 105 as described herein. The device 1205 may include a receiver 1210, a communications manager 1215, and a transmitter 1230. The device 1205 may also include a processor. Each of these components may be in communication with one another (e.g., via one or more buses).

The receiver 1210 may receive information such as packets, user data, or control information associated with various information channels (e.g., control channels, data channels, and information related to high efficiency transmission mode signaling, etc.). Information may be passed on to other components of the device 1205. The receiver 1210 may be an example of aspects of the transceiver 1420 described with reference to FIG. 14. The receiver 1210 may utilize a single antenna or a set of antennas.

The communications manager 1215 may be an example of aspects of the communications manager 1115 as described herein. The communications manager 1215 may include a capability indication component 1220 and an efficiency operating reception component 1225. The communications manager 1215 may be an example of aspects of the communications manager 1410 described herein.

The capability indication component 1220 may receive, from a LTE, an indication of a capability of the UE to operate according to a first transmission efficiency operating mode and a second transmission efficiency operating mode, the first transmission efficiency operating mode corresponding to a first capability associated with emissions and the second transmission efficiency operating mode corresponding to a second capability associated with emissions that is relaxed relative to the first capability associated with emissions.

The efficiency operating reception component 1225 may receive signals from the LTE according to the first transmission efficiency operating mode or the second transmission efficiency operating mode based on the received indication of the capability.

The transmitter 1230 may transmit signals generated by other components of the device 1205. In some examples, the transmitter 1230 may be collocated with a receiver 1210 in a transceiver module. For example, the transmitter 1230 may be an example of aspects of the transceiver 1420 described with reference to FIG. 14. The transmitter 1230 may utilize a single antenna or a set of antennas.

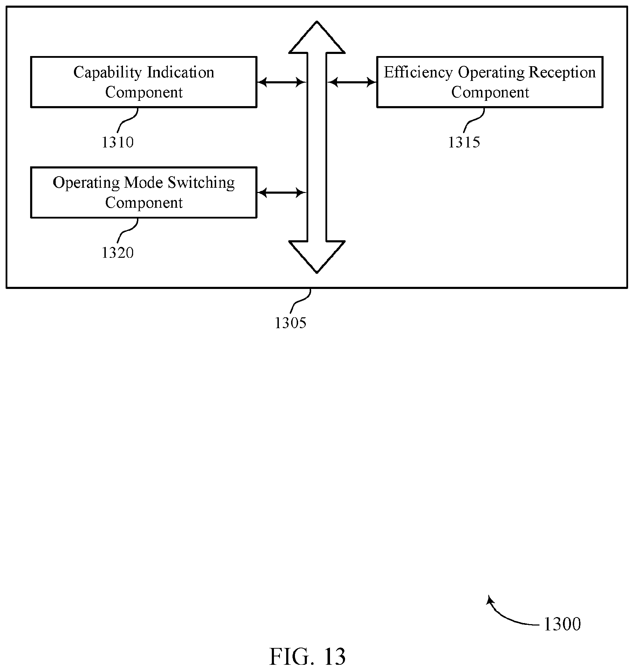

**FIG.** 13 shows a block diagram 1300 of a communications manager 1305 that supports high efficiency transmission mode signaling in accordance with aspects of the present disclosure. The communications manager 1305 may be an example of aspects of a communications manager 1115, a communications manager 1215, or a communications manager 1410 described herein. The communications manager 1305 may include a capability indication component 1310, an efficiency operating reception component 1315, and an operating mode switching component 1320. Each of these modules may communicate, directly or indirectly, with one another (e.g., via one or more buses).

The capability indication component 1310 may receive, from a LTE, an indication of a capability of the UE to operate according to a first transmission efficiency operating mode and a second transmission efficiency operating mode, the first transmission efficiency operating mode corresponding to a first capability associated with emissions and the second transmission efficiency operating mode corresponding to a second capability associated with emissions that is relaxed relative to the first capability associated with emissions.

In some cases, the indication of the capability includes a first index identifying the first transmission efficiency operating mode, or a second index identifying the second transmission efficiency operating mode, or a combination thereof.

In some cases, the indication of the capability includes a value for each of a set of parameters for the UE that are associated with the first transmission efficiency operating mode, or the second index identifying the second transmission efficiency operating mode, or a combination thereof.

In some cases, the set of parameters include one or more of a power headroom, or a maximum power reduction, or an indication of an antenna configuration, or a battery level, or an adjacent channel leakage ratio, or an error vector magnitude, or a specific absorption rate, or a maximum permissible exposure, or a switching speed or latency between the first transmission efficiency operating mode and the second transmission efficiency operating mode, or a transmission bandwidth for the first or second transmission efficiency operating mode.

The efficiency operating reception component 1315 may receive signals from the LTE according to the first transmission efficiency operating mode or the second transmission efficiency operating mode based on the received indication of the capability.

The operating mode switching component 1320 may receive, from the UE, uplink signals according to the first transmission efficiency operating mode.

In some examples, the operating mode switching component 1320 may transmit, to the UE, a command to switch to the second transmission efficiency operating mode.

In some examples, the operating mode switching component 1320 may receive, from the UE, uplink signals according to the second transmission efficiency operating mode.

**FIG. 14** shows a diagram of a system 1400 including a device 1405 that supports high efficiency transmission mode signaling in accordance with aspects of the present disclosure. The device 1405 may be an example of or include the components of device 1105, device 1205, or a base station 105 as described herein. The device 1405 may include components for bi-directional voice and data communications including components for transmitting and receiving communications, including a communications manager 1410, a network communications manager 1415, a transceiver 1420, one or more antennas 1425, memory 1430, a processor 1440, and an inter-station communications manager 1445. These components may be in electronic communication via one or more buses (e.g., bus 1450).

The communications manager 1410 may receive, from a LTE, an indication of a capability of the UE to operate according to a first transmission efficiency operating mode and a second transmission efficiency operating mode, the first transmission efficiency operating mode corresponding to a first capability associated with emissions and the second transmission efficiency operating mode corresponding to a second capability associated with emissions that is relaxed relative to the first capability associated with emissions and receive signals from the UE according to the first transmission efficiency operating mode or the second transmission efficiency operating mode based on the received indication of the capability.

The network communications manager 1415 may manage communications with the core network (e.g., via one or more wired backhaul links). For example, the network communications manager 1415 may manage the transfer of data communications for client devices, such as one or more UEs 115.

The transceiver 1420 may communicate bi-directionally, via one or more antennas, wired, or wireless links as described above. For example, the transceiver 1420 may represent a wireless transceiver and may communicate bi-directionally with another wireless transceiver. The transceiver 1420 may also include a modem to modulate the packets and provide the modulated packets to the antennas for transmission, and to demodulate packets received from the antennas.

In some cases, the wireless device may include a single antenna 1425. However, in some cases the device may have more than one antenna 1425, which may be capable of concurrently transmitting or receiving multiple wireless transmissions. In some cases, antennas 1025 may be a group of antennas or one or more antenna arrays.

The memory 1430 may include RAM, ROM, or a combination thereof. The memory 1430 may store computer-readable code 1435 including instructions that, when executed by a processor (e.g., the processor 1440) cause the device to perform various functions described herein. In some cases, the memory 1430 may contain, among other things, a BIOS which may control basic hardware or software operation such as the interaction with peripheral components or devices.

The processor 1440 may include an intelligent hardware device, (e.g., a general-purpose processor, a DSP, a CPU, a microcontroller, an ASIC, an FPGA, a programmable logic device, a discrete gate or transistor logic component, a discrete hardware component, or any combination thereof). In some cases, the processor 1440 may be configured to operate a memory array using a memory controller. In some cases, a memory controller may be integrated into processor 1440. The processor 1440 may be configured to execute computer-readable instructions stored in a memory (e.g., the memory 1430) to cause the device 1405 to perform various functions (e.g., functions or tasks supporting high efficiency transmission mode signaling).

The inter-station communications manager 1445 may manage communications with other base station 105, and may include a controller or scheduler for controlling communications with UEs 115 in cooperation with other base stations 105. For example, the inter-station communications manager 1445 may coordinate scheduling for transmissions to UEs 115 for various interference mitigation techniques such as beamforming or joint transmission. In some examples, the inter-station communications manager 1445 may provide an X2 interface within an LTE/LTE-A wireless communication network technology to provide communication between base stations 105.

The code 1435 may include instructions to implement aspects of the present disclosure, including instructions to support wireless communications. The code 1435 may be stored in a non-transitory computer-readable medium such as system memory or other type of memory. In some cases, the code 1435 may not be directly executable by the processor 1440 but may cause a computer (e.g., when compiled and executed) to perform functions described herein.

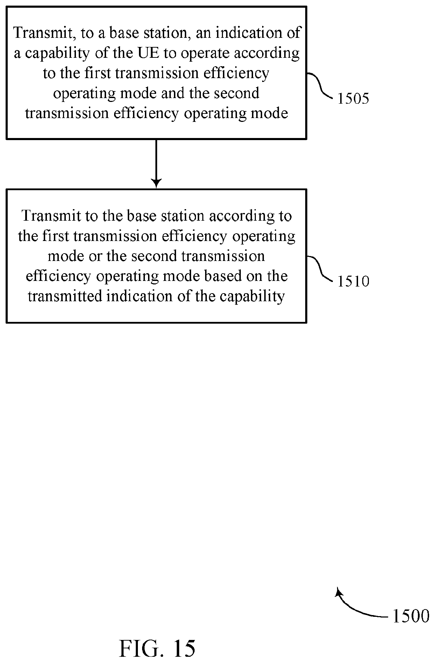

**FIG. 15** shows a flowchart illustrating a method 1500 that supports high efficiency transmission mode signaling in accordance with aspects of the present disclosure. The operations of method 1500 may be implemented by a UE 115 or its components as described herein. For example, the operations of method 1500 may be performed by a communications manager as described with reference to FIGs. 7 through 10. In some examples, a UE may execute a set of instructions to control the functional elements of the UE to perform the functions described below. Additionally, or alternatively, a LTE may perform aspects of the functions described below using special-purpose hardware.

At 1505, the LTE may transmit, to a base station, an indication of a capability of the UE to operate according to the first transmission efficiency operating mode and the second transmission efficiency operating mode. For example, the UE may transmit a capabilities report via RRC signaling indicating a capability of the LTE to operate according to a standard transmission efficiency operating mode or a high transmission efficiency operating mode. The indication may be an index corresponding to an entry in a table providing LTE categories or efficiency modes, a value associated with hardware capabilities or channel conditions, a parameter, or any combination thereof. The operations of 1505 may be performed according to the methods described herein. In some examples, aspects of the operations of 1505 may be performed by an operating mode capability component as described with reference to FIGs. 7 through 10.

At 1510, the UE may transmit to the base station according to the first transmission efficiency operating mode or the second transmission efficiency operating mode based on the transmitted indication of the capability. For example, the UE may receive a downlink transmission including one or more uplink grants for the uplink transmission, and the grant may indicate an operating mode to use in the uplink transmission. The UE may select a first or second transmission efficiency operating mode (e.g., the standard efficiency operating mode or the high efficiency operating mode). The base station may indicate the transmission efficiency operating mode on a per scheduling grant basis, may indicate the transmission efficiency operating mode via semi-persistence with L1-signaling, via MAC CE signaling, or other downlink transmissions. The UE may send the uplink transmission over the granted resources according to the selected or indicated operating mode. The operations of 1510 may be performed according to the methods described herein. In some examples, aspects of the operations of 1510 may be performed by an efficiency operating transmission component as described with reference to FIGs. 7 through 10.

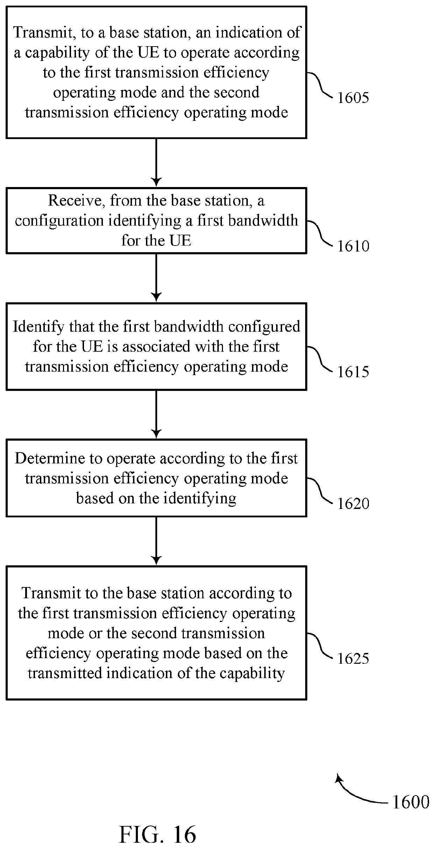

**FIG. 16** shows a flowchart illustrating a method 1600 that supports high efficiency transmission mode signaling in accordance with aspects of the present disclosure. The operations of method 1600 may be implemented by a UE 115 or its components as described herein. For example, the operations of method 1600 may be performed by a communications manager as described with reference to FIGs. 7 through 10. In some examples, a UE may execute a set of instructions to control the functional elements of the UE to perform the functions described below. Additionally, or alternatively, a LTE may perform aspects of the functions described below using special-purpose hardware.

At 1605, the LTE may transmit, to a base station, an indication of a capability of the UE to operate according to the first transmission efficiency operating mode and the second transmission efficiency operating mode. For example, the UE may transmit a capabilities report via RRC signaling indicating a capability of the LTE to operate according to a standard transmission efficiency operating mode or a high transmission efficiency operating mode. The indication may be an index corresponding to an entry in a table providing LTE categories or efficiency modes, a value associated with hardware capabilities or channel conditions, a parameter, or any combination thereof. The operations of 1605 may be performed according to the methods described herein. In some examples, aspects of the operations of 1605 may be performed by an operating mode capability component as described with reference to FIGs. 7 through 10.

At 1610, the UE may receive, from the base station, a configuration identifying a first bandwidth for the UE. For example, the base station may transmit an uplink grant indicating resources over which to transmit an uplink transmission. The uplink grant may indicate one or more restricted bandwidths (e.g., in a particular BWP). The operations of 1610 may be performed according to the methods described herein. In some examples, aspects of the operations of 1610 may be performed by a restricted bandwidth component as described with reference to FIGs. 7 through 10.

At 1615, the UE may identify that the first bandwidth configured for the UE is associated with the first transmission efficiency operating mode. For example, the UE may determine that uplink transmissions on the indicated BWP should be transmitted according to a particular efficiency mode. The operations of 1615 may be performed according to the methods described herein. In some examples, aspects of the operations of 1615 may be performed by a restricted bandwidth component as described with reference to FIGs. 7 through 10.

At 1620, the LTE may determine to operate according to the first transmission efficiency operating mode based on the identifying. For example, UE 115 may determine that a high transmission efficiency operating mode is permitted or expected for uplink transmissions on the indicated BWP. The operations of 1620 may be performed according to the methods described herein. In some examples, aspects of the operations of 1620 may be performed by a restricted bandwidth component as described with reference to FIGs. 7 through 10.

At 1625, the UE may transmit to the base station according to the first transmission efficiency operating mode or the second transmission efficiency operating mode based on the transmitted indication of the capability. For instance, the UE may transmit the uplink transmission on the granted resources (e.g., the restricted BWP) using the associated transmission efficiency mode (e.g., a high transmission efficiency operating mode). The operations of 1625 may be performed according to the methods described herein. In some examples, aspects of the operations of 1625 may be performed by an efficiency operating transmission component as described with reference to FIGs. 7 through 10.

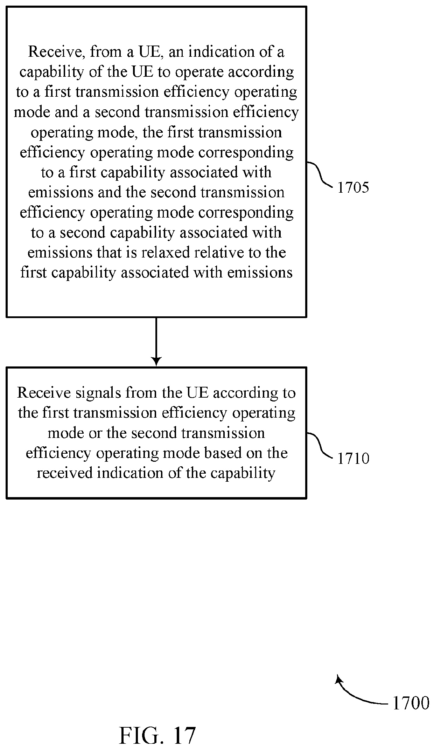

**FIG. 17** shows a flowchart illustrating a method 1700 that supports high efficiency transmission mode signaling in accordance with aspects of the present disclosure. The operations of method 1700 may be implemented by a base station 105 or its components as described herein. For example, the operations of method 1700 may be performed by a communications manager as described with reference to FIGs. 11 through 14. In some examples, a base station may execute a set of instructions to control the functional elements of the base station to perform the functions described below. Additionally, or alternatively, a base station may perform aspects of the functions described below using special-purpose hardware.

At 1705, the base station may receive, from a LTE, an indication of a capability of the LTE to operate according to a first transmission efficiency operating mode and a second transmission efficiency operating mode, the first transmission efficiency operating mode corresponding to a first capability associated with emissions and the second transmission efficiency operating mode corresponding to a second capability associated with emissions that is relaxed relative to the first capability associated with emissions. For example, the base station may receive a capabilities report via RRC signaling indicating a capability of the UE to operate according to a standard transmission efficiency operating mode or a high transmission efficiency operating mode. The indication may be an index corresponding to an entry in a table providing UE categories or efficiency modes, a value associated with hardware capabilities or channel conditions, a parameter, or any combination thereof. The operations of 1705 may be performed according to the methods described herein. In some examples, aspects of the operations of 1705 may be performed by a capability indication component as described with reference to FIGs. 11 through 14.

At 1710, the base station may receive signals from the UE according to the first transmission efficiency operating mode or the second transmission efficiency operating mode based on the received indication of the capability. For example, the base station may transmit, to the UE, a downlink transmission including one or more uplink grants for the uplink transmission, and the grant may indicate an operating mode to use in the uplink transmission. The UE may select a first or second transmission efficiency operating mode (e.g., the standard efficiency operating mode or the high efficiency operating mode). The base station may indicate the transmission efficiency operating mode on a per scheduling grant basis, may indicate the transmission efficiency operating mode via semi-persistence with L1-signaling, via MAC CE signaling, or other downlink transmissions. The UE may send the uplink transmission over the granted resources according to the selected or indicated operating mode. The operations of 1710 may be performed according to the methods described herein. In some examples, aspects of the operations of 1710 may be performed by an efficiency operating reception component as described with reference to FIGs. 11 through 14.

It should be noted that the methods described herein describe possible implementations, and that the operations and the steps may be rearranged or otherwise modified and that other implementations are possible. Further, aspects from two or more of the methods may be combined.

Techniques described herein may be used for various wireless communications systems such as code division multiple access (CDMA), time division multiple access (TDMA), frequency division multiple access (FDMA), orthogonal frequency division multiple access (OFDMA), single carrier frequency division multiple access (SC-FDMA), and other systems. A CDMA system may implement a radio technology such as CDMA2000, Universal Terrestrial Radio Access (UTRA), etc. CDMA2000 covers IS-2000, IS-95, and IS-856 standards. IS-2000 Releases may be commonly referred to as CDMA2000 1X, 1X, etc. IS-856 (TIA-856) is commonly referred to as CDMA2000 1xEV-DO, High Rate Packet Data (HRPD), etc. UTRA includes Wideband CDMA (WCDMA) and other variants of CDMA. A TDMA system may implement a radio technology such as Global System for Mobile Communications (GSM).

An OFDMA system may implement a radio technology such as Ultra Mobile Broadband (UMB), Evolved UTRA (E-UTRA), Institute of Electrical and Electronics Engineers (IEEE) 802.11 (Wi-Fi), IEEE 802.16 (WiMAX), IEEE 802.20, Flash-OFDM, etc. UTRA and E-UTRA are part of Universal Mobile Telecommunications System (UMTS). LTE, LTE-A, and LTE-A Pro are releases of UMTS that use E-UTRA. UTRA, E-UTRA, UMTS, LTE, LTE-A, LTE-A Pro, NR, and GSM are described in documents from the organization named "3rd Generation Partnership Project" (3GPP). CDMA2000 and UMB are described in documents from an organization named "3rd Generation Partnership Project 2" (3GPP2). The techniques described herein may be used for the systems and radio technologies mentioned herein as well as other systems and radio technologies. While aspects of an LTE, LTE-A, LTE-A Pro, or NR system may be described for purposes of example, and LTE, LTE-A, LTE-A Pro, or NR terminology may be used in much of the description, the techniques described herein are applicable beyond LTE, LTE-A, LTE-A Pro, or NR applications.

A macro cell generally covers a relatively large geographic area (e.g., several kilometers in radius) and may allow unrestricted access by UEs with service subscriptions with the network provider. A small cell may be associated with a lower-powered base station, as compared with a macro cell, and a small cell may operate in the same or different (e.g., licensed, unlicensed, etc.) frequency bands as macro cells. Small cells may include pico cells, femto cells, and micro cells according to various examples. A pico cell, for example, may cover a small geographic area and may allow unrestricted access by UEs with service subscriptions with the network provider. A femto cell may also cover a small geographic area (e.g., a home) and may provide restricted access by UEs having an association with the femto cell (e.g., UEs in a closed subscriber group (CSG), UEs for users in the home, and the like). An eNB for a macro cell may be referred to as a macro eNB. An eNB for a small cell may be referred to as a small cell eNB, a pico eNB, a femto eNB, or a home eNB. An eNB may support one or multiple (e.g., two, three, four, and the like) cells, and may also support communications using one or multiple component carriers.

The wireless communications systems described herein may support synchronous or asynchronous operation. For synchronous operation, the base stations may have similar frame timing, and transmissions from different base stations may be approximately aligned in time. For asynchronous operation, the base stations may have different frame timing, and transmissions from different base stations may not be aligned in time. The techniques described herein may be used for either synchronous or asynchronous operations.

Information and signals described herein may be represented using any of a variety of different technologies and techniques. For example, data, instructions, commands, information, signals, bits, symbols, and chips that may be referenced throughout the description may be represented by voltages, currents, electromagnetic waves, magnetic fields or particles, optical fields or particles, or any combination thereof.

The various illustrative blocks and modules described in connection with the disclosure herein may be implemented or performed with a general-purpose processor, a DSP, an ASIC, an FPGA, or other programmable logic device, discrete gate or transistor logic, discrete hardware components, or any combination thereof designed to perform the functions described herein. A general-purpose processor may be a microprocessor, but in the alternative, the processor may be any conventional processor, controller, microcontroller, or state machine. A processor may also be implemented as a combination of computing devices (e.g., a combination of a DSP and a microprocessor, multiple microprocessors, one or more microprocessors in conjunction with a DSP core, or any other such configuration).

The functions described herein may be implemented in hardware, software executed by a processor, firmware, or any combination thereof. If implemented in software executed by a processor, the functions may be stored on or transmitted over as one or more instructions or code on a computer-readable medium. Other examples and implementations are within the scope of the disclosure and appended claims. For example, due to the nature of software, functions described herein can be implemented using software executed by a processor, hardware, firmware, hardwiring, or combinations of any of these. Features implementing functions may also be physically located at various positions, including being distributed such that portions of functions are implemented at different physical locations.

Computer-readable media includes both non-transitory computer storage media and communication media including any medium that facilitates transfer of a computer program from one place to another. A non-transitory storage medium may be any available medium that can be accessed by a general purpose or special purpose computer. By way of example, and not limitation, non-transitory computer-readable media may include RAM, ROM, electrically erasable programmable ROM (EEPROM), flash memory, compact disk (CD) ROM or other optical disk storage, magnetic disk storage or other magnetic storage devices, or any other non-transitory medium that can be used to carry or store desired program code means in the form of instructions or data structures and that can be accessed by a general-purpose or special-purpose computer, or a general-purpose or special-purpose processor. Also, any connection is properly termed a computer-readable medium. For example, if the software is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of medium. Disk and disc, as used herein, include CD, laser disc, optical disc, digital versatile disc (DVD), floppy disk and Blu-ray disc where disks usually reproduce data magnetically, while discs reproduce data optically with lasers. Combinations of the above are also included within the scope of computer-readable media.

As used herein, including in the claims, "or" as used in a list of items (e.g., a list of items prefaced by a phrase such as "at least one of" or "one or more of') indicates an inclusive list such that, for example, a list of at least one of A, B, or C means A or B or C or AB or AC or BC or ABC (i.e., A and B and C). Also, as used herein, the phrase "based on" shall not be construed as a reference to a closed set of conditions. For example, an exemplary step that is described as "based on condition A" may be based on both a condition A and a condition B without departing from the scope of the present disclosure. In other words, as used herein, the phrase "based on" shall be construed in the same manner as the phrase "based at least in part on."

In the appended figures, similar components or features may have the same reference label. Further, various components of the same type may be distinguished by following the reference label by a dash and a second label that distinguishes among the similar components. If just the first reference label is used in the specification, the description is applicable to any one of the similar components having the same first reference label irrespective of the second reference label, or other subsequent reference label.

The description set forth herein, in connection with the appended drawings, describes example configurations and does not represent all the examples that may be implemented or that are within the scope of the claims. The term "exemplary" used herein means "serving as an example, instance, or illustration," and not "preferred" or "advantageous over other examples." The detailed description includes specific details for the purpose of providing an understanding of the described techniques. These techniques, however, may be practiced without these specific details. In some instances, well-known structures and devices are shown in block diagram form in order to avoid obscuring the concepts of the described examples.

## Claims

1. A method for wireless communication at a user equipment, UE, that is capable of operating according to a first transmission efficiency operating mode and a second transmission efficiency operating mode, the first transmission efficiency operating mode corresponding to a first capability associated with emissions and the second transmission efficiency operating mode corresponding to a second capability associated with emissions, the method comprising:
transmitting (1505), to a base station, an indication of a capability of the LTE to operate according to the first transmission efficiency operating mode and the second transmission efficiency operating mode;
identifying a frequency allocation for uplink transmission by the UE, the frequency allocation comprising a set of resource blocks;
determining that a power level associated with using the first transmission efficiency operating mode for the frequency allocation is less than a power level associated with using the second transmission efficiency operating mode for the frequency allocation; and
selecting, by the UE, a subset of the set of resource blocks for transmission according to the first transmission efficiency operating mode based at least in part on the determining;
transmitting (1510), to the base station, a signal via the selected subset of the set of resource blocks according to the first transmission efficiency operating mode based at least in part on the transmitted indication of the capability.

2. The method of claim 1, wherein the indication of the capability comprises:
a first index identifying the first transmission efficiency operating mode, or
a second index identifying the second transmission efficiency operating mode, or a combination thereof.

3. The method of claim 2, wherein the indication of the capability comprises:
a value for each of a set of parameters for the LTE that are associated with the first transmission efficiency operating mode, or
the second index identifying the second transmission efficiency operating mode, or a combination thereof.

4. The method of claim 3, wherein the set of parameters comprise:
one or more of a power headroom, or
a maximum power reduction, or
an indication of an antenna configuration, or
a battery level, or
an adjacent channel leakage ratio, or
an error vector magnitude, or
a specific absorption rate, or
a maximum permissible exposure, or
a switching speed or latency between the first transmission efficiency operating mode and the second transmission efficiency operating mode, or
a transmission bandwidth for the first or second transmission efficiency operating mode.

5. The method of claim 1, wherein:
the first capability associated with emissions comprises:
a first adjacent channel leakage ratio, or
a first error vector magnitude, or
a first specific absorption rate, or
a first maximum permissible exposure, or a combination thereof; and
the second capability associated with emissions comprises:
a second adjacent channel leakage ratio, or
a second error vector magnitude, or
a second specific absorption rate, or
a second maximum permissible exposure, or a combination thereof.

6. An apparatus for wireless communication at a user equipment, LTE, that is capable of operating according to a first transmission efficiency operating mode and a second transmission efficiency operating mode, comprising:
a processor (1040),
a memory (1030) coupled with the processor (1040); wherein the processor (1040) is configured to cause the apparatus to:
transmit, to a base station, an indication of a capability of the LTE to operate according to the first transmission efficiency operating mode and the second transmission efficiency operating mode;
identify a frequency allocation for uplink transmission by the LTE, the frequency allocation comprising a set of resource blocks;
determine that a power level associated with using the first transmission efficiency operating mode for the frequency allocation is less than a power level associated with using the second transmission efficiency operating mode for the frequency allocation; and
select, by the UE, a subset of the set of resource blocks for transmission according to the first transmission efficiency operating mode based at least in part on the determining;
transmit to the base station a signal via the selected subset of the set of resource blocks according to the first transmission efficiency operating mode based at least in part on the transmitted indication of the capability.

7. The apparatus of claim 6, wherein the processor (1040) is furhter configured to cause the apparatus to perform the method of any one of claims 2- 5.

## Patentansprüche

1. Verfahren zur drahtlosen Kommunikation bei einem Benutzergerät, UE, das in der Lage ist, gemäß einem ersten Übertragungseffizienz-Betriebsmodus und einem zweiten Übertragungseffizienz-Betriebsmodus zu arbeiten, wobei der erste Übertragungseffizienz-Betriebsmodus einer ersten Fähigkeit entspricht, die mit Emissionen verbunden ist, und der zweite Übertragungseffizienz-Betriebsmodus einer zweiten Fähigkeit entspricht, die mit Emissionen verbunden ist, wobei das Verfahren umfasst:
Übertragen (1505) einer Anzeige einer Fähigkeit des UE, gemäß dem ersten Übertragungseffizienz-Betriebsmodus und dem zweiten Übertragungseffizienz-Betriebsmodus zu arbeiten, an eine Basisstation;
Identifizieren einer Frequenzzuweisung für die Übertragung auf der Aufwärtsstrecke durch das UE, wobei die Frequenzzuweisung einen Satz von Ressourcenblöcken umfasst;
Bestimmen, dass ein Leistungspegel, der mit der Verwendung des ersten Übertragungseffizienz-Betriebsmodus für die Frequenzzuweisung verbunden ist, geringer ist als ein Leistungspegel, der mit der Verwendung des zweiten Übertragungseffizienz-Betriebsmodus für die Frequenzzuweisung verbunden ist; und
Auswählen einer Teilmenge des Satzes von Ressourcenblöcken für die Übertragung gemäß dem ersten Übertragungseffizienz-Betriebsmodus durch das UE, zumindest teilweise basierend auf dem Bestimmen;
Übertragen (1510) eines Signals an die Basisstation über die ausgewählte Teilmenge des Satzes von Ressourcenblöcken gemäß dem ersten Übertragungseffizienz-Betriebsmodus, der zumindest teilweise auf der übertragenen Anzeige der Fähigkeit basiert.

2. Verfahren nach Anspruch 1, wobei die Anzeige der Fähigkeit umfasst:
einen ersten Index, der den ersten Übertragungseffizienz-Betriebsmodus angibt, oder
einen zweiten Index, der den zweiten Übertragungseffizienz-Betriebsmodus angibt, oder eine Kombination davon.

3. Verfahren nach Anspruch 2, wobei die Anzeige der Fähigkeit umfasst:
einen Wert für jeden aus einem Satz von Parametern für das UE, die mit dem ersten Übertragungseffizienz-Betriebsmodus verbunden sind, oder
den zweiten Index, der den zweiten Übertragungseffizienz-Betriebsmodus angibt, oder eine Kombination davon.

4. Verfahren nach Anspruch 3, wobei der Satz von Parametern umfasst:
eine oder mehrere Leistungsreserven, oder
eine maximale Leistungsreduzierung, oder
eine Angabe über eine Antennenkonfiguration, oder
einen Batteriestand, oder
ein Nachbarkanal-Leckverlust-Verhältnis, oder
eine Größe des Fehlervektors, oder
eine spezifische Absorptionsrate oder
eine maximal zulässige Exposition, oder
eine Umschaltgeschwindigkeit oder -latenz zwischen dem ersten Übertragungseffizienz-Betriebsmodus und dem zweiten Übertragungseffizienz-Betriebsmodus, oder
eine Übertragungsbandbreite für den ersten oder zweiten Übertragungseffizienz-Betriebsmodus.

5. Verfahren nach Anspruch 1, wobei:
die erste Fähigkeit im Zusammenhang mit Emissionen umfasst:
ein erstes Nachbarkanal-Leckverlust-Verhältnis, oder
einen ersten Fehlervektorbetrag, oder
eine erste spezifische Absorptionsrate, oder
eine erste maximal zulässige Exposition oder eine Kombination davon; und
die zweite Fähigkeit im Zusammenhang mit Emissionen umfasst:
ein zweites Nachbarkanal-Leckverlust-Verhältnis, oder
einen zweiten Fehlervektorbetrag, oder
eine zweite spezifische Absorptionsrate, oder
eine zweite höchstzulässige Exposition oder eine Kombination davon.

6. Vorrichtung zur drahtlosen Kommunikation an einem Benutzergerät, UE, die in der Lage ist, gemäß einem ersten Übertragungseffizienz-Betriebsmodus und einem zweiten Übertragungseffizienz-Betriebsmodus zu arbeiten, umfassend:
einen Prozessor (1040),
einen Speicher (1030), der mit dem Prozessor (1040) gekoppelt ist; wobei der Prozessor (1040) so konfiguriert ist, dass er die Vorrichtung veranlasst, zum:
Übertragen einer Anzeige der Fähigkeit des UE, gemäß dem ersten Übertragungseffizienz-Betriebsmodus und dem zweiten Übertragungseffizienz-Betriebsmodus zu arbeiten, an eine Basisstation;
Identifizieren einer Frequenzzuweisung für die Übertragung auf der Aufwärtsstrecke durch das UE, wobei die Frequenzzuweisung einen Satz von Ressourcenblöcken umfasst;
Bestimmen, dass ein Leistungspegel, der mit der Verwendung des ersten Übertragungseffizienz-Betriebsmodus für die Frequenzzuweisung verbunden ist, geringer ist als ein Leistungspegel, der mit der Verwendung des zweiten Übertragungseffizienz-Betriebsmodus für die Frequenzzuweisung verbunden ist; und
Auswählen einer Teilmenge des Satzes von Ressourcenblöcken für die Übertragung gemäß dem ersten Übertragungseffizienz-Betriebsmodus durch das UE, zumindest teilweise basierend auf dem Bestimmen;
Übertragen eines Signals an die Basisstation über die ausgewählte Teilmenge des Satzes von Ressourcenblöcken gemäß dem ersten Übertragungseffizienz-Betriebsmodus, der zumindest teilweise auf der übertragenen Anzeige der Fähigkeit basiert.

7. Vorrichtung nach Anspruch 6, wobei der Prozessor (1040) ferner so konfiguriert ist, dass er die Vorrichtung veranlasst, das Verfahren nach einem der Ansprüche 2 bis 5 durchzuführen.

## Revendications

1. Un procédé de communication sans fil au niveau d'un équipement utilisateur, UE, qui est apte à fonctionner selon un mode de fonctionnement en premier rendement de transmission et un mode de fonctionnement en deuxième rendement de transmission, le mode de fonctionnement en premier rendement de transmission correspondant à une première capacité associée aux émissions et le mode de fonctionnement en deuxième rendement de transmission correspondant à une deuxième capacité associée aux émissions, le procédé comprenant :
la transmission (1505), à une station de base, d'une indication d'une capacité de l'UE pour fonctionner selon le mode de fonctionnement en premier rendement de transmission et selon le mode de fonctionnement en deuxième rendement de transmission ;
l'identification d'une attribution de fréquences pour une transmission de liaison montante par l'UE, l'attribution de fréquence comprenant un ensemble de blocs de ressource ;
la détermination qu'un niveau de puissance associé à l'utilisation du mode de fonctionnement en premier rendement de transmission pour l'attribution de fréquences est inférieur à un niveau de puissance associé à l'utilisation du mode de fonctionnement en deuxième rendement de transmission pour l'attribution de fréquences ; et
la sélection, par l'UE, d'un sous-ensemble de l'ensemble de blocs de ressource pour une transmission selon le mode de fonctionnement en premier rendement de transmission, sur la base au moins en partie de la détermination ;
la transmission (1510), à la station de base, d'un signal via le sous-ensemble sélectionné de l'ensemble de blocs de ressource selon le mode de fonctionnement en premier rendement de transmission, sur la base au moins en partie de l'indication de la capacité transmise.

2. Le procédé selon la revendication 1, dans lequel l'indication de la capacité comprend :
un premier indice identifiant le mode de fonctionnement en premier rendement de transmission, ou
un deuxième indice identifiant le mode de fonctionnement en deuxième rendement de transmission, ou une combinaison de ceux-ci.

3. Le procédé selon la revendication 2, dans lequel l'indication de la capacité comprend :
une valeur pour chacun d'un ensemble de paramètres pour l'UE qui sont associés au mode de fonctionnement en premier rendement de transmission, ou
le deuxième indice identifiant le mode de fonctionnement en deuxième rendement de transmission, ou une combinaison de ceux-ci.

4. Le procédé selon la revendication 3, dans lequel l'ensemble de paramètres comprend un ou plusieurs parmi :
une marge de puissance, ou
une réduction de puissance maximale, ou
une indication d'une configuration d'antenne, ou
un niveau de batterie, ou
un taux de fuite vers un canal adjacent, ou
une norme de vecteur d'erreur, ou
un taux d'absorption spécifique, ou
une exposition maximale admissible, ou
une latence ou une vitesse de commutation entre le mode de fonctionnement en premier rendement de transmission et le mode de fonctionnement en deuxième rendement de transmission, ou
une largeur de bande de transmission pour le mode de fonctionnement en premier ou en deuxième rendement de transmission.

5. Le procédé selon la revendication 1, dans lequel :
la première capacité associée aux émissions comprend :
un premier taux de fuite vers le canal adjacent, ou
une première norme de vecteur d'erreur, ou
un premier taux d'absorption spécifique, ou
une première exposition maximale admissible, ou une combinaison de ceux-ci ; et
la deuxième capacité associée aux émissions comprend :
un deuxième taux de fuite vers le canal adjacent, ou
une deuxième norme de vecteur d'erreur, ou
un deuxième taux d'absorption spécifique, ou
une deuxième exposition maximale admissible, ou une combinaison de ceux-ci.

6. Un appareil de communication sans fil au niveau d'un équipement utilisateur, UE, qui est apte à fonctionner selon un mode de fonctionnement en premier rendement de transmission et un mode de fonctionnement en deuxième rendement de transmission, comprenant :
un processeur (1040),
une mémoire (1030) couplée au processeur (1040) ;
dans lequel le processeur (1040) est configuré pour amener l'appareil à :
transmettre, à une station de base, une indication d'une capacité de l'UE à fonctionner selon le mode de fonctionnement en premier rendement de transmission et le mode de fonctionnement en deuxième rendement de transmission ;
identifier une attribution de fréquences pour une transmission de liaison montante par l'UE, l'attribution de fréquence comprenant un ensemble de blocs de ressource ;
déterminer qu'un niveau de puissance associé à l'utilisation du mode de fonctionnement en premier rendement de transmission pour l'attribution de fréquences est inférieur à un niveau de puissance associé à l'utilisation du mode de fonctionnement en deuxième rendement de transmission pour l'attribution de fréquences ; et
sélectionner, par l'UE, un sous-ensemble de l'ensemble de blocs de ressource pour une transmission selon le mode de fonctionnement en premier rendement de transmission, sur la base au moins en partie de la détermination ;
transmettre, à la station de base, un signal via le sous-ensemble sélectionné de l'ensemble de blocs de ressource selon le mode de fonctionnement en premier rendement de transmission, sur la base au moins en partie de l'indication de la capacité transmise.

7. L'appareil selon la revendication 6, dans lequel le processeur (1040) est configuré en outre pour amener l'appareil à mettre en oeuvre le procédé selon une des revendications 2 à 5.
